# EUROPÄISCHE PATENTSCHRIFT

(11) **EP 4 195 125 B1**
(45) Veröffentlichungstag und Bekanntmachung des Hinweises auf die Patenterteilung: **05.08.2026**
(21) Anmeldenummer: 22211179.1
(22) Anmeldetag: 02.12.2022
(51) Int. Cl.: G06Q 10/08, B66F 9/06, G05B 19/418

(54) **LOGISTIKSYSTEM, VERFAHREN ZUM BETREIBEN EINES LOGISTIKSYSTEMS UND ZUM TRANSPORTIEREN EINES FLURFÖRDERZEUGS IN EINEM LOGISTIKSYSTEM, AUFRÜSTSATZ UND COMPUTERPROGRAMMPRODUKT**
LOGISTICS SYSTEM, METHOD FOR OPERATING A LOGISTICS SYSTEM AND FOR TRANSPORTING AN INDUSTRIAL TRUCK IN A LOGISTICS SYSTEM, UPGRADE KIT AND COMPUTER PROGRAM PRODUCT
SYSTÈME LOGISTIQUE, PROCÉDÉ DE FONCTIONNEMENT D'UN SYSTÈME LOGISTIQUE ET DE TRANSPORT D'UN CHARIOT DE MANUTENTION DANS UN SYSTÈME LOGISTIQUE, KIT DE MISE À NIVEAU ET PRODUIT PROGRAMME INFORMATIQUE

(30) Priorität: 09.12.2021 DE 102021132533
(43) Veröffentlichungstag der Anmeldung: 14.06.2023
(73) Patentinhaber: Jungheinrich Aktiengesellschaft, 22047 Hamburg (DE)
(72) Erfinder: WOLLNACK, Simon, 21033 Hamburg (DE); RICHTER, Maximilian, 22297 Hamburg (DE); WETEGROVE, Ralf, 22850 Norderstedt (DE)
(74) Vertreter: Seemann & Partner Patentanwälte mbB

(56) Entgegenhaltungen:
- EP-A1- 3 388 988
- EP-A1- 3 511 287
- WO-A1-2014/145918
- DE-A1- 102015 205 032
- DE-A1- 102018 205 036
- US-A1- 2019 135 598
- US-A1- 2019 176 328

## Beschreibung

Die Erfindung betrifft ein Logistiksystem sowie ein Verfahren zum Betreiben eines Logistiksystems. Die Erfindung betrifft ebenso ein Verfahren zum Transportieren eines Flurförderzeugs in einem Logistiksystem sowie einen Aufrüstsatz für ein Flurförderzeug. Ferner betrifft die Erfindung ein Computerprogrammprodukt, welches ein Logistiksystem dazu veranlasst, ein Verfahren zum Betreiben eines Logistiksystems auszuführen.

Für den autonomen Fahrbetrieb eingerichtete Flurförderzeuge werden zunehmend in logistischen Einrichtungen eingesetzt. Solche Fahrzeuge sind mit entsprechenden Sensoren zur Positionsbestimmung und Umfelderkennung ausgestattet. Sie sind in der Lage einen vorgegebenen Weg automatisiert oder sogar autonom abzufahren und Hindernissen auszuweichen. Neben diesen autonomen Fahrzeugen werden in logistischen Einrichtungen jedoch auch nach wie vor rein manuell geführte Flurförderzeuge und Lagerfahrzeuge eingesetzt. In vielen Fällen liegt also ein Mischbetrieb aus autonom fahrenden Flurförderzeugen und manuell gesteuerten Flurförderzeugen vor.

Die an einem Logistikstandort durchgeführten Arbeitsschritte variieren in ihrer Komplexität. Dies führt dazu, dass einzelne, weniger komplexe Schritte vollautomatisch durchgeführt werden und somit für autonome Fahrzeuge prädestiniert sind. Andere komplexe Vorgänge, wie beispielsweise das Kommissionieren also das Entnehmen von Waren variabler Größe aus Boxen und/oder von Paletten sind der Automatisierung bisher nicht zugänglich. Aus diesem Grund werden diese Tätigkeiten nach wie vor von einer Person durchgeführt, die bevorzugt ein manuell geführtes Flurförderzeug einsetzt.

Der Mischbetrieb, also eine Situation, in der autonom fahrende Flurförderzeuge und manuell gesteuerte Flurförderzeuge gemeinsam in einer Logistikeinrichtung zusammen betrieben werden, wird auf absehbare Zeit den Normalfall darstellen. Aus diesem Grund ist es wünschenswert, diesen Mischbetrieb zu optimieren.

EP3388988A1 beschreibt ein Transportsystem, in dem eine Vielzahl von autonomen Transportmitteln betrieben wird. Diese Vielzahl wird als Transmittelgesamtmenge bezeichnet. Zum Transport eines Gegenstands, beispielsweise von Waren oder auch von Personen von einem Transportstandort zu einem Transportzielort, werden aus der Transportmittelgesamtmenge einige der autonom fahrenden Fahrzeuge ausgewählt und als sogenannte Transportmittelteilmenge zusammengestellt. Die Transportmittel werden allesamt vollständig autonom betrieben. Die Transportmittel erhalten ihre Transportaufträge von einer Zentralsteuereinheit. Es ist in dem beschriebenen System vorgesehen, dass die Fahrzeuge eine Ladung gemeinsam aufnehmen und transportieren. Hierzu werden die Fahrzeuge miteinander gekoppelt und halten beispielsweise anhand der Messdaten entsprechende Abstandssensoren einen vorgegebenen Abstand zueinander ein. In einem solchen Verbund kann außerdem vorgesehen sein, dass eines der Fahrzeuge als sogenanntes "Mastertransportmittel" fungiert, während die übrigen Fahrzeuge als "Slavetransportmittel" betrieben werden. Das Mastertransportmittel leitet wahlweise die Anweisungen der Zentraleinheit an das oder die Slavetransportmittel weiter oder aber es übernimmt die Steuerung der Slavetransportmittel. Somit ist eine Fernsteuerung des Slavetransportmittels durch das Mastertransportmittel möglich.

Aufgabe der Erfindung ist es, ein Logistiksystem, ein Verfahren zum Betreiben eines Logistiksystems sowie ein Verfahren zum Transportieren eines Flurförderzeugs in einem Logistiksystem, einen Aufrüstsatz für ein Flurförderzeug und ein Computerprogrammprodukt, welches ein Logistiksystem dazu veranlasst, ein solches Verfahren auszuführen, anzugeben, wobei in dem Logistiksystem ein Betrieb von Flurförderzeugen, welche für den autonomen Fahrbetrieb ausgerüstet und eingerichtet sind, und Flurförderzeugen, welche nicht für den autonomen Fahrbetrieb ausgerüstet und eingerichtet sind, verbessert werden soll.

Die Aufgabe wird gelöst durch ein Logistiksystem, umfassend ein Führungs-Flurförderzeug und zumindest ein Folge-Flurförderzeug, wobei das Führungs-Flurförderzeug für den autonomen Fahrbetrieb ausgerüstet und eingerichtet ist und das zumindest eine Folge-Flurförderzeug nicht für den autonomen Fahrbetrieb ausgerüstet und eingerichtet ist, und wobei das Führungs-Flurförderzeug ein Umfeldüberwachungssystem umfasst, welches einen Umfeldüberwachungsbereich aufspannt, wobei das Führungs-Flurförderzeug und das zumindest eine Folge-Flurförderzeug jeweils eine Kommunikationseinheit aufweisen und dazu eingerichtet sind, zwischen dem Führungs-Flurförderzeug und dem zumindest einen Folge-Flurförderzeug eine drahtlose Datenverbindung zu betreiben, wobei das Führungs-Flurförderzeug und das zumindest eine Folge-Flurförderzeug ferner dazu eingerichtet sind, dass das Führungs-Flurförderzeug das zumindest eine Folge-Flurförderzeug über die drahtlose Datenverbindung fernsteuert, und wobei das Führungs-Flurförderzeug eine Autonomie-Steuereinheit umfasst, die dazu eingerichtet ist, das Folge-Flurförderzeug entlang einer Sollbahn zu steuern und zur Steuerung des Folge-Flurförderzeugs eine Position und eine Orientierung des Folge-Flurförderzeugs in Bezug auf das Führungs-Flurförderzeug zu bestimmen, wobei die Autonomie-Steuereinheit ferner dazu eingerichtet ist das Folge-Flurförderzeug derart fernzusteuern, dass sich das Folge-Flurförderzeug während seiner Fahrt entlang der Sollbahn stets innerhalb des Umfeldüberwachungsbereichs des Führungsflurförderzeugs befindet.

Das Führungs-Flurförderzeug ist insbesondere für den autonomen Fahrbetrieb mit einem Automatisierungsgrad von 4 (Level 4) oder höher ausgerüstet und eingerichtet. Das Folge-Flurförderzeug weist insbesondere einen Automatisierungsgrad von maximal 3 (Level 3) auf, ist also ausgerüstet und eingerichtet um mit einem Automatisierungsgrad von 3 oder kleiner betrieben zu werden. Ferner ist insbesondere vorgesehen, dass das Folge-Flurförderzeug für den autonomen Fahrbetrieb mit einem Automatisierungsgrad von 2 (Level 2) oder geringer, ferner insbesondere für den autonomen Fahrbetrieb mit einem Automatisierungsgrad von 1 (Level 1) oder geringer ausgerüstet und eingerichtet ist. Ferner insbesondere ist vorgesehen, dass das Folge-Flurförderzeug keinen Automatisierungsgrad aufweist, also gänzlich nicht für den autonomen Fahrbetrieb ausgerüstet und eingerichtet ist. Im Hinblick auf den Automatisierungsgrad kommt die allgemein übliche Definition gemäß BASt, VDA und SAE-Standard J3016 zur Anwendung. Gemäß der ferner allgemein üblichen Definition wird von "autonomem Fahren" ab einem Automatisierungsgrad von 4 oder höher gesprochen. Dementsprechend ist das Folge-Flurförderzeug, welches zum Betrieb mit einem Automatisierungsgrad von 3 oder insbesondere einem geringeren Level ausgerüstet und eingerichtet ist, im Kontext der vorliegenden Beschreibung als nicht für den autonomen Fahrbetrieb eingerichtet und ausgerüstet anzusehen.

Eine Trajektorie der Sollbahn kann sowohl von der Autonomie-Steuereinheit des Führungs-Flurförderzeugs als auch von einer Zentralinstanz des Logistiksystems, beispielsweise einem Zentralrechner des Logistiksystems, festgelegt werden.

Für eine Fahrt entlang der Sollbahn ist sowohl vorgesehen, dass sich sowohl das Führungs-Flurförderzeug als auch das Folge-Flurförderzeug gemeinsam bewegen als auch, dass sich das Führungs-Flurförderzeug nicht bewegt, also steht, während das Folge-Flurförderzeug der festgelegten Sollbahn innerhalb des Umfeldüberwachungsbereichs des Führungs-Flurförderzeugs folgt. Verschiedene Fahrmodi können während der Fahrt entlang der Sollbahn abwechseln. Es ist ebenfalls nicht erforderlich, dass sich zu jedem Zeitpunkt alle Abschnitte der Sollbahn innerhalb des Umfeldüberwachungsbereichs des Führungs-Flurförderzeugs befinden. Beispielsweise kann die vorgesehene Sollbahn sehr viel größer sein als der Umfeldüberwachungsbereich des Führungs-Flurförderzeugs. Entscheidend ist, dass sich stets das Folge-Flurförderzeug während seiner Fahrt entlang der Sollbahn innerhalb des Umfeldüberwachungsbereichs des Führungs-Flurförderzeugs befindet.

Das Umfeldüberwachungssystem des Führungs-Flurförderzeugs umfasst Sensoren zur Umfeldüberwachung. Bei diesen Sensoren handelt es sich beispielsweise um Laserscanner, Kameras, Radarscanner, Lidarscanner oder Ultraschallsensoren. Der durch das Umfeldüberwachungssystem festgelegte Umfeldüberwachungsbereich ist insbesondere ein Warnfeld, ein Schutzfeld, ein Personenschutzbereich oder ein Maschinenschutzbereich. Das Umfeldüberwachungssystem des Führungs-Flurförderzeugs ist insbesondere dazu ausgerüstet und eingerichtet den Umfeldüberwachungsbereich als Personenschutzbereich zu betreiben. Das Umfeldüberwachungssystem dient jedoch nicht ausschließlich dem Personenschutz, es verhindert auch Kollisionen des autonom fahrenden Führungs-Flurförderzeugs mit Gegenständen wie Maschinen oder dergleichen. Ferner insbesondere ist das Umfeldüberwachungssystem des Führungs-Flurförderzeugs ausgerüstet und eingerichtet, auch einen Personenschutz im Hinblick auf das Folge-Flurförderzeug zu gewährleisten. Auch in diesem Zusammenhang wirkt der von dem Umfeldüberwachungssystem des Führungs-Flurförderzeugs aufgespannte Umfeldüberwachungsbereich nicht notwendigerweise ausschließlich als Personenschutzbereich, es ist ebenso insbesondere vorgesehen, dass Kollisionen des Folge-Flurförderzeugs mit Gegenständen von dem Umfeldüberwachungssystem vermieden werden.

Es ist ferner insbesondere vorgesehen, dass auch das Folge-Flurförderzeug über ein eigenes Umfeldüberwachungssystem verfügt, und beispielsweise für den zusätzlichen Personenschutz einen eigenen, weiteren Umfeldüberwachungsbereich aufspannt. Es ist insbesondere vorgesehen, dass das Umfeldüberwachungssystem des Folge-Flurförderzeugs in das Umfeldüberwachungssystem des Führungs-Flurförderzeugs eingebunden ist. In diesem Zusammenhang ist insbesondere vorgesehen, dass Daten des Umfeldüberwachungssystems des Folge-Flurförderzeugs an das Umfeldüberwachungssystem des Führungs-Flurförderzeugs übermittelt werden. Hierzu wird beispielsweise die drahtlose Datenverbindung zwischen den beiden Flurförderzeugen genutzt. Auf diese Weise kann der Umfeldüberwachungsbereich des Führungs-Flurförderzeugs mithilfe der Sensorik des Folge Flurförderzeugs erweitert werden.

Zum Beispiel kann von dem Umfeldüberwachungssystem des Folge-Flurförderzeugs ein Objekt an einer bestimmten Position erkannt werden. Diese Information kann an das Umfeldüberwachungssystem des Führungs-Flurförderzeugs weitergegeben werden, woraufhin das Umfeldüberwachungssystem des Führungs-Flurförderzeugs beispielsweise seinen Umfeldüberwachungsbereich in Richtung dieses Objekts ausdehnt. Ebenso ist insbesondere vorgesehen, dass das Umfeldüberwachungssystem des Folge-Flurförderzeugs beispielsweise Verletzungen des Umfeldüberwachungsbereichs selbständig erkennt und eine solche Schutzfeldverletzung dem Umfeldüberwachungssystem des Führungs-Flurförderzeugs mitteilt. Auf Grundlage dieser Daten kann das Umfeldüberwachungssystem des Führungs-Flurförderzeugs Maßnahmen ergreifen, beispielsweise die Sollbahn für das Folge-Flurförderzeug verändern oder anpassen, oder die eigene Fahrt verändern oder anpassen. Ebenso ist vorgesehen, dass das Folge-Flurförderzeug selbstständig auf eine Schutzfeldverletzung reagiert, und die Schutzfeldverletzung dem Führungs-Flurförderzeug lediglich mitteilt. Im Fall einer Schutzfeldverletzung stoppt also das jeweilige Flurförderzeug, dessen Schutzfeld verletzt wurde und übermittelt zusätzlich die sicherheitsrelevanten Informationen beispielsweise an alle weiteren Fahrzeuge, die beispielsweise in einem gemeinsamen Konvoi fahren, zumindest aber an das Führungs-Flurförderzeug.

Das Folge-Flurförderzeug befindet sich zu jedem Zeitpunkt der Fahrt entlang der Sollbahn innerhalb des Umfeldüberwachungsbereichs des Führungs-Flurförderzeugs. So kann das Umfeldüberwachungssystem des Führungs-Flurförderzeugs nicht nur den Personen- und Kollisionsschutz des Führungs-Flurförderzeugs selbst, sondern auch den Personen- und Kollisionsschutz des Folge-Flurförderzeugs gewährleisten.

Damit das Führungs-Flurförderzeug das Folge-Flurförderzeug entlang der Sollbahn steuern kann, ist es erforderlich, dass das Führungs-Flurförderzeug die Position und die Orientierung des Folge-Flurförderzeugs in Bezug auf das Führungs-Flurförderzeug bestimmt. Dies kann beispielsweise durch Auswertung von Sensordaten des Umfeldüberwachungssystems des Führungs-Flurförderzeugs erfolgen. Somit ist es vorteilhaft nicht erforderlich, dass das Folge-Flurförderzeug selbst ein Lokalisierungssystem umfasst.

Gemäß weiterer Ausführungsformen ist vorgesehen, dass die Autonomie-Steuereinheit des Führungs-Flurförderzeugs dazu eingerichtet ist, die Position und/oder die Orientierung des Folge-Flurförderzeugs durch Auswertung von internen Parametern aus einer Fahrzeugsteuerung des Folge-Flurförderzeugs zu bestimmen. Dies kann vorgesehen sein, wenn sowohl das Führungs-Flurförderzeug als auch das Folge-Flurförderzeug mit einem Lokalisierungssystem ausgerüstet sind. Ein solches Lokalisierungssystem arbeitet beispielsweise auf der Grundlage eines lokal in einer Logistikeinrichtung installierten Positionssystems. Das Lokalisierungssystem ermittelt beispielsweise durch Triangulation die Position des jeweiligen Flurförderzeugs in Bezug auf in der Logistikeinrichtung vorhandene Funk-Basisstationen (Beacons). Beispielsweise kann anhand der Signalstärke die Entfernung zu einem Zugangspunkt gemessen oder zumindest abgeschätzt werden. Sofern die Position dieses Zugangspunkts in der Logistikeinrichtung bekannt ist und außerdem mehrere Funkdatenverbindungen ausgewertet werden, kann mittels Triangulation die Position des Flurförderzeugs in der Logistikeinrichtung bestimmt werden. Die ausgewerteten Funkdatenverbindungen werden beispielsweise auf der Grundlage von RFID, Ultra-Wide-Band, Bluetooth und/oder WLAN betrieben. Es ist ferner beispielsweise vorgesehen, dass das Positionssystem des jeweiligen Flurförderzeugs auf der Grundlage eines GPS Systems arbeitet.

Das Logistiksystem gemäß einer solchen Ausführungsform umfasst also eine Logistikeinrichtung, beispielsweise einen Logistikstandort, in der das Führungs-Flurförderzeug und das zumindest eine Folge-Flurförderzeug betrieben werden. Die zur Positionsbestimmung verwendeten Basisstationen sind an bekannten Orten in einem solchen Logistikstandort vorhanden, um eine Positionsbestimmung der Flurförderzeuge zu ermöglichen.

Gemäß dieser Ausführungsform bestimmen die Flurförderzeuge ihre Position und beispielsweise auch ihre Orientierung in absoluten Koordinaten des durch den Logistikstandort festgelegten Koordinatensystems. Aus diesen absoluten Werten lässt sich die Position und/oder die Orientierung des Führungs-Flurförderzeugs und des Folge-Flurförderzeugs relativ zueinander berechnen.

Entscheidend für eine erfolgreiche Steuerung des Folge-Flurförderzeugs durch das Führungs-Flurförderzeug ist nämlich letztlich die Bestimmung der relativen Ortskoordinaten und der relativen Orientierung der beiden Flurförderzeuge zueinander. Dies ist unabhängig davon, ob die konkrete Berechnung nun in absoluten Koordinaten oder in relativen Koordinaten erfolgt. In einem Logistiksystem gemäß einer Ausführungsform, gemäß der sowohl das Führungs-Flurförderzeug als auch das Folge-Flurförderzeug mit einem Lokalisierungssystem ausgerüstet sind, kann durch Austausch und Auswertung der Positionsdaten der einzelnen Flurförderzeuge, welche dem jeweiligen Lokalisierungssystem entstammen, also anhand absoluter Koordinaten, die relative Anordnung und ggf. zusätzlich auch die Orientierung der beiden Flurförderzeuge zueinander gewonnen werden.

Diesbezüglich ist vorteilhaft vorgesehen, dass das Führungs-Flurförderzeug die Positionsdaten des Folge-Flurförderzeugs übermittelt bekommt. Dies erfolgt beispielsweise über die drahtlose Datenverbindung, über die das Führungs-Flurförderzeug das zumindest eine Folge-Flurförderzeug fernsteuert. Beispielsweise kennt das Führungs-Flurförderzeug seine eigene Position anhand der Daten seines eigenen Lokalisierungssystems. Die Position des Folge-Flurförderzeugs wird dem Führungs-Flurförderzeug beispielsweise permanent übermittelt oder das Führungs-Flurförderzeug fragt die Position des Folge-Flurförderzeugs bei Bedarf ab. Durch Vergleich der beiden absoluten Positionen der beiden Flurförderzeuge (in einem gemeinsamen Koordinatensystem) kann das Führungs-Flurförderzeug die relative Position der beiden Flurförderzeuge zueinander bestimmen. Die Orientierung der beiden Flurförderzeuge zueinander, also insbesondere die Orientierung des Folge-Flurförderzeugs in Bezug auf das Führungs-Flurförderzeug kann ebenfalls beispielsweise aus den Daten der Lokalisierungssysteme der jeweiligen Flurförderzeuge berechnet werden. So können beispielsweise Funkverbindungen ihrer Richtung nach ausgewertet werden, wodurch sich die Orientierung des jeweiligen Flurförderzeugs zu den Basisstationen eines solchen Funksystems und somit die absolute Orientierung des Flurförderzeugs in der Logistikeinrichtung bestimmen lässt.

Zusätzlich oder alternativ können zur Bestimmung der Orientierung der Flurförderzeuge zueinander Daten des Umfeldüberwachungssystems, insbesondere des Führungs-Flurförderzeugs, wie beispielsweise Daten von Laserscannern, Kameras, Radarscannern oder dergleichen, ausgewertet werden. Es ist ferner vorteilhaft vorgesehen, wenn die Daten, welche beispielsweise aus dem Positionserfassungssystem gewonnen werden (absolute Koordinaten und absolute Orientierung) mit den Daten, welche aus dem Umfeldüberwachungssystem gewonnen werden (relative Koordinaten und relative Orientierung) miteinander abgeglichen werden.

Die Kommunikationseinheiten sowohl des Führungs-Flurförderzeugs als auch des zumindest einen Folge-Flurförderzeugs sind für die drahtlose Kommunikation ausgerüstet und eingerichtet. Die zwischen den Kommunikationseinheiten etablierten drahtlosen Datenverbindungen sind beispielsweise Funkdatenverbindungen. Diese Funkdatenverbindungen werden beispielsweise gemäß einem der üblichen und allgemein bekannten Funkdatenübertragungsstandards betrieben, beispielsweise auf der Grundlage von WLAN, Bluetooth, Ultra-Wide-Band oder dergleichen.

Alternativ oder zusätzlich kann die drahtlose Datenverbindung zwischen der Kommunikationseinheit des Führungs-Flurförderzeugs und der Kommunikationseinheit des Folge-Flurförderzeugs auf der Grundlage von Lichtsignalen erfolgen. Gemäß einer Ausführungsform werden zur Erzeugung der Lichtsignale die an den Flurförderzeugen vorhandenen Lichter, beispielsweise Fahrlichter, Bremslichter, Fahrtrichtungsanzeigelichter, Warnleuchten oder dergleichen eingesetzt. Die Lichtsignale, auf deren Grundlage gemäß dieser Ausführungsform die drahtlose Datenverbindung betrieben wird, können mit einer so hohen Frequenz verändert werden, beispielsweise anund ausgeschaltet werden, so dass die für die Datenübertragung verwendeten Veränderungen der Lichtzeichen für das menschliche Auge nicht wahrnehmbar sind. So bleibt für einen Betrachter der äußere Eindruck der Lichtzeichen des Flurförderzeugs unverändert. Die ursprünglich vorgesehene Funktion der Lichtzeichen wird vorteilhaft nicht beeinträchtigt. Ebenfalls vorgesehen ist, dass die Lichtzeichen im nicht sichtbaren Frequenzbereich übertragen werden. Hierzu sind gegebenenfalls zusätzliche speziell für diesen Zweck vorgesehene Lichter an den Flurförderzeugen vorhanden. Auch gemäß diesem Ausführungsbeispiel bleibt der äußere Eindruck des Flurförderzeugs für den Betrachter unverändert, die Funktion der Lichtzeichenanlage (Bremslichter, Fahrtrichtungsanzeiger etc.) nicht beeinträchtigt. Zur Detektion dieser Lichtsignale, welche gegebenenfalls mit hoher Frequenz und/oder auch im nicht sichtbaren Wellenlängenbereich emittiert werden, können entsprechende Detektoren an den Flurförderzeugen vorgesehen sein.

Vorteilhaft kann mithilfe des erfindungsgemäßen Logistiksystems ein an sich nicht für den autonomen Fahrbetrieb ausgerüstetes Flurförderzeug, nämlich das Folge-Flurförderzeug, vollautomatisch und indirekt autonom fahrend, entlang einer Sollbahn befördert werden, nämlich mithilfe des Führungs-Flurförderzeugs. So ist es möglich, mithilfe einer relativ geringen Anzahl von für den autonomen Betrieb ausgerüsteten und eingerichteten Fahrzeugen, nämlich den Führungs-Flurförderzeugen, eine große Anzahl von nicht für den autonomen Betrieb ausgerüsteten und eingerichteten Flurförderzeugen, den Folge-Flurförderzeugen, in einem Logistikstandort autonom zu bewegen. Es ist nicht erforderlich, jedes Flurförderzeug mit der entsprechend teuren und aufwendigen Hardware für den autonomen Fahrbetrieb auszurüsten, was einen erheblichen ökonomischen Vorteil darstellt. Das Folge-Flurförderzeug muss lediglich die technische Möglichkeit bieten, über eine drahtlose Datenverbindung Befehle zu empfangen und diese in Steuerbefehle für die Fahrzeugsteuerung umzusetzen. Mit anderen Worten muss das Folge-Flurförderzeug über die drahtlose Datenverbindung fernsteuerbar sein.

Zur Steuerung des Folge-Flurförderzeugs bestimmt das Führungs-Flurförderzeug eine Position des Folge-Flurförderzeugs. Hierzu können Sensordaten des Umfeldüberwachungssystems und/oder interne Parameter aus einer Fahrzeugsteuerung des Folge-Flurförderzeugs ausgewertet werden. Bereits weiter oben ist der Fall beschrieben, dass das Folge-Flurförderzeug über ein eigenes Positionserfassungssystem verfügt, und somit in der Lage ist, seine absolute Position innerhalb einer Logistikeinrichtung zu bestimmen. Solche Daten können aus einer Fahrzeugsteuerung des Folge-Flurförderzeug abgefragt werden, um sie anschließend auszuwerten. Dies setzt jedoch voraus, dass das Folge-Flurförderzeug über eine geeignete Sensorik, beispielsweise ein Lokalisierungssystem verfügt, wie es weiter oben beschrieben wurde, und der Positionswert von dem Folge-Flurförderzeug an das Führungs-Flurförderzeug übertragen wird.

Verfügt das Folge-Flurförderzeug nicht über ein eigenes Lokalisierungssystem, so kann es für das Führungs-Flurförderzeug dennoch sinnvoll sein zur Bestimmung der Position des Folge Flurförderzeugs Daten aus der Fahrzeugsteuerung des Folge-Flurförderzeugs abzufragen. Die Autonomie-Einheit des Führungs-Flurförderzeugs ist gemäß einer solchen Ausführungsform dazu eingerichtet, zum einen Sensordaten des eigenen Umfeldüberwachungssystems abzufragen und auszuwerten. Da sich das Folge-Flurförderzeug im Umfeldüberwachungsbereich des Führungs-Flurförderzeugs befindet, ist es für das Umfeldüberwachungssystem des Führungs-Flurförderzeugs sichtbar, so dass seine Position von dem Umfeldüberwachungssystem bestimmt werden kann. Die Autonomie-Einheit ist jedoch ferner insbesondere dazu eingerichtet, interne Parameter aus der Fahrzeugsteuerung des Folge-Flurförderzeugs abzufragen. Die Datenkommunikation erfolgt über die drahtlose Datenverbindung zwischen dem Führungs-Flurförderzeug und dem Folge-Flurförderzeug. Es ist ferner insbesondere vorgesehen, dass das Folge-Flurförderzeug fortlaufend die entsprechenden Parameter an das Führungs-Flurförderzeug kommuniziert. So ist es nicht erforderlich, dass das Führungs-Flurförderzeug diese aktiv von dem Folge-Flurförderzeug abfragt, was jedoch ebenfalls vorgesehen sein kann.

Interne Parameter, welche beispielsweise von dem Folge-Flurförderzeug (welches nicht über ein eigenes Positionserfassungssystem verfügt) zu dem Führungs-Flurförderzeug kommuniziert werden, sind beispielsweise Messwerte eines Wegstreckenmessers, beispielsweise die ab einem bestimmten Punkt oder in einem bestimmten Zeitintervall zurückgelegte Strecke, eine momentane Geschwindigkeit, also der Anzeigewert eines Tachometers, ein Lenkwinkel, eine oder mehrere Radgeschwindigkeiten, eine Motordrehzahl, beispielsweise des Traktionsmotors, und dergleichen. Anhand dieser internen Parameter des Folge-Flurförderzeugs lässt sich die Position des Folge-Flurförderzeugs zumindest abschätzen. Diese internen Parameter können ergänzend zu den aus dem Umfeldüberwachungssystem des Führungs-Flurförderzeugs gewonnenen Daten betreffend die Position des Folge Flurförderzeugs verwendet werden. Gegebenenfalls können diese Daten auch zusätzlich zu den aus einem Lokalisierungssystem des Folge Flurförderzeugs gewonnenen Daten (sofern dieses über ein eigenes Positionserfassungssystem verfügt) verwendet werden. So ist es auf verschiedenen Wegen und mit verschieden hoher Redundanz möglich, die Position des Folge-Flurförderzeugs in Bezug auf das Führungs-Flurförderzeug zu berechnen. Die gegebenenfalls vorhandenen Redundanzen in den Daten können ebenfalls genutzt werden, um beispielsweise die Positionsermittlung für das Folge-Flurförderzeug zu verbessern oder um eine Plausibilitätsprüfung durchzuführen.

Es wird auf die eine oder andere Weise eine relative Position des Folge-Flurförderzeugs in Bezug auf das Führungs-Flurförderzeug bestimmt. Diese relative Position hat sich als geeigneter Parameter zur Berechnung von an das Folge-Flurförderzeug zu sendenden Steuerbefehlen herausgestellt, sodass dieses der Sollbahn in der gewünschten Weise folgt. Die relative Positionierung der beiden Flurförderzeuge zueinander kann selbstverständlich auch anhand von absoluten Positionskoordinaten der Flurförderzeuge (in einem gemeinsamen Koordinatensystem) bestimmt werden. So ist gemäß einer weiteren Ausführungsform vorgesehen, dass das Folge-Flurförderzeug seine absoluten Koordinaten an das Führungs-Flurförderzeug übermittelt. Die Autonomie-Einheit des Führungs-Flurförderzeugs ist dazu eingerichtet, aus diesen absoluten Koordinaten die relativen Koordinaten der Flurförderzeuge zueinander zu berechnen und die Bahnen (Trajektorien) der Flurförderzeuge zueinander zu steuern oder auch rückgekoppelt zu regeln. Eine solche Ausführungsform setzt voraus, dass das Folge-Flurförderzeug über entsprechende Sensoren zur Positionsbestimmung verfügt.

Gemäß einer vorteilhaften Ausführungsform ist das Logistiksystem dadurch fortgebildet, dass die Autonomie-Steuereinheit ferner dazu eingerichtet ist, das Führungs-Flurförderzeug von einem Ausgangspunkt zu einem Zielpunkt zu steuern und insbesondere während dieser Fahrt das zumindest eine Folge-Flurförderzeug innerhalb des Umfeldüberwachungsbereichs des Führungs-Flurförderzeugs in Formation mit dem Führungs-Flurförderzeug fahrend fernzusteuern.

Im Kontext der vorliegenden Beschreibung ist unter einer Fahrt "in Formation" zu verstehen, dass das Führungs-Flurförderzeug und das Folge-Flurförderzeug während einer gemeinsamen Fahrt, also, wenn sich beide Flurförderzeuge in Bewegung befinden, eine mehr oder weniger konstante räumliche Anordnung zueinander beibehalten. Das Führungs-Flurförderzeug und das zumindest eine Folge-Flurförderzeug bilden mit anderen Worten eine Art Konvoi. Bei einer solchen Konvoifahrt kann das Folge-Flurförderzeug beispielsweise mehr oder weniger genau in der Spur des Führungs-Flurförderzeugs fahren. In einem solchen Fall entspricht die Fahrt in Formation einer Hinterherfahrt. Es kann jedoch ebenso vorgesehen sein, dass bei einer solchen Fahrt in Formation das Führungs-Flurförderzeug seitlich versetzt zu dem Folge-Flurförderzeug fährt oder neben diesem. Die feste räumliche Beziehung der Flurförderzeuge relativ zueinander wird in allen diesen Szenarien erfüllt, wobei diese streng genommen nur für den Fall einer Geradeausfahrt oder einer stationären Kurvenfahrt gilt. Beim Einlenken in eine Kurve muss aus geometrischen Gründen die feste räumliche Beziehung des Führungs-Flurförderzeugs und des Folge-Flurförderzeugs in vielen Fällen kurzzeitig aufgehoben werden. Beispielsweise muss das Führungs-Flurförderzeug bereits einlenken, also seine Fahrtrichtung ändern, während sich das zumindest eine Folge-Flurförderzeug noch in Geradeausfahrt befindet. Dies ist insbesondere bei einem Konvoi relevant, welcher aus einem einzigen Führungs-Flurförderzeug und mehreren Folge-Flurförderzeugen besteht, welche hinter dem Führungs-Flurförderzeug her fahren. Auch ein solcher Betriebszustand soll jedoch im Kontext der vorliegenden Beschreibung als eine Fahrt in Formation angesehen werden. Die Anordnung des Führungs-Flurförderzeugs zu dem zumindest einen Folge-Flurförderzeug ist bei der Fahrt in Formation prinzipiell beliebig. Wichtig ist nur, dass sich das zumindest eine Folge-Flurförderzeug im Umfeldüberwachungsbereich des Führungs-Flurförderzeugs befindet.

Während einer Formationsfahrt, insbesondere in einer Konvoifahrt, bei der sich das Folge-Flurförderzeug unmittelbar hinter dem Führungs-Flurförderzeug befindet, kann die Positionserfassung des Folge-Flurförderzeugs ggf. reduziert oder teilweise abgeschaltet werden. Beispielsweise ist es in einer solchen Betriebssituation denkbar, dass das Folge-Flurförderzeug ähnlich der Funktionalität eines Abstandstempomaten in einem Straßenfahrzeug einen konstanten Abstand zu dem vorausfahrenden Führungs-Flurförderzeug einhält und seine Geschwindigkeit selbständig regelt.

Gemäß einer weiteren vorteilhaften Ausführungsform ist das Logistiksystem dadurch fortgebildet, dass die Autonomie-Steuereinheit dazu eingerichtet ist, für eine Fahrt von einem Ausgangspunkt zu einem Zielpunkt eine von dem Führungs-Flurförderzeug abzufahrende Führungsbahn und eine Sollbahn für das Folge-Flurförderzeug zu berechnen. Es ist ferner insbesondere vorgesehen, dass die Sollbahn-Berechnung nicht innerhalb der Autonomie-Steuereinheit des Führungs-Flurförderzeugs, sondern in einer Zentralinstanz des Logistiksystems, beispielsweise in einem Zentralrechner, stattfindet. Die Bahndaten werden anschließend an die Autonomie-Steuereinheit des Führungs-Flurförderzeugs übermittelt.

Die Sollbahn-Berechnung erfolgt beispielsweise unter Berücksichtigung eines Typs des Folge-Flurförderzeugs. Beispielsweise werden die Abmessungen des entsprechenden Typs des Folge-Flurförderzeugs berücksichtigt, ggf. auch sein Fahrverhalten und/oder seine Manövrierfähigkeit. Die Feststellung des Typs des Folge-Flurförderzeugs durch das Führungs-Flurförderzeug findet beispielsweise über die drahtlose Datenverbindung statt. Hierzu wird ferner beispielsweise eine Typenkennung oder eine Seriennummer von dem Führungs-Flurförderzeug abgefragt oder von dem Folge-Flurförderzeug an dieses übermittelt. Die Übertragung der Daten betreffend den Typ des Folge-Flurförderzeugs erfolgt beispielsweise in dem Moment, in dem die drahtlose Datenverbindung zwischen den Flurförderzeugen hergestellt wird. Alternativ oder auch zusätzlich kann diese Information auch zu Beginn der Fernsteuerung des Folge-Flurförderzeugs durch das Führungs-Flurförderzeug erfolgen. Der Typ des Folge-Flurförderzeugs wird bei der Berechnung der Bahn für das Folge-Flurförderzeug von der Autonomie-Einheit des Führungs-Flurförderzeugs berücksichtigt.

Gemäß einer weiteren Ausführungsform ist die Autonomie-Einheit des Führungs-Flurförderzeugs dazu eingerichtet, die berechnete Sollbahn und eine Ist-Position oder Ist-Bahn des Folge-Flurförderzeugs miteinander abzugleichen. Dies geschieht beispielsweis in einem Regelkreis. Mit anderen Worten kann das Folge-Flurförderzeug unter Verwendung dieses Regelkreises auf der berechneten Bahn entlang gesteuert werden.

In die Bahn-Berechnung des Folge-Flurförderzeugs können auch von dem Umfeldüberwachungssystem ermittelte Informationen einfließen. Erkennt beispielsweise das Umfeldüberwachungssystem des Führungs-Flurförderzeugs ein Hindernis, so kann dieses dafür sorgen, dass das Führungs-Flurförderzeug dieses Hindernis umfährt. Die Information betreffend das Hindernis kann aber auch in die Berechnung der Sollbahn des Folge-Flurförderzeugs mit einfließen, so dass nicht nur eine Kollision des Führungs-Flurförderzeugs mit dem Hindernis, sondern auch eine Kollision des Folge-Flurförderzeugs mit diesem Hindernis vermieden wird.

Die Berechnung der Führungsbahn, also des Weges, den das Führungs-Flurförderzeug zwischen einem Ausgangspunkt und einem Zielpunkt nimmt, kann unter Berücksichtigung der örtlichen Gegebenheiten der Logistikeinrichtung erfolgen. Hierzu sind entsprechende Infrastrukturdaten der Logistikeinrichtung der Autonomie-Steuereinheit zugänglich. Solche Daten können lokal im Führungs-Flurförderzeug gespeichert oder über eine Datenverbindung für dieses zugänglich sein.

Gemäß einer weiteren vorteilhaften Ausführungsform ist das Logistiksystem dadurch fortgebildet, dass dieses ferner ein Anfragesystem umfasst, welches seinerseits eine Anfrageeinheit und eine Anfragekoordinationseinheit umfasst. Die Anfrageeinheit ist dazu eingerichtet, eine ein bestimmtes Folge-Flurförderzeug betreffende Versendungsanfrage zu generieren, wobei die Versendungsanfrage Informationen betreffend eine Abholzone oder einen Abholpunkt und Informationen betreffend eine Ablieferzone oder einen Ablieferpunkt umfasst, wobei das bestimmte Folge-Flurförderzeug von der Abholzone oder dem Abholpunkt zu der Ablieferzone oder dem Ablieferpunkt zu transportieren ist. Die Anfragekoordinationseinheit ist dazu eingerichtet, die Versendungsanfrage von der Anfrageeinheit zu empfangen und festzustellen, ob das Führungs-Flurförderzeug verfügbar ist und, sofern dieses verfügbar ist, der Autonomie-Steuereinheit des Führungs-Flurförderzeugs einen innerhalb einer Anfahrtsumgebung der Abholzone oder des Abholpunkts gelegenen Ort als Ausgangspunkt und einen innerhalb einer Anfahrtsumgebung der Ablieferzone oder des Ablieferpunkts gelegenen Ort als Zielpunkt zu übermitteln.

Die Anfrageeinheit kann als eine separate Einheit, beispielsweise als separate Bedieneinheit oder als funktionelle Einheit in einem vorhandenen System des Folge-Flurförderzeugs vorgesehen sein. Die Versendungsanfrage kann als Reaktion auf eine beispielsweise manuell durch einen Mitarbeiter an einem Benutzerendgerät erzeugte Eingabe generiert werden. Alternativ wird die Versendungsanfrage in Reaktion auf eine Nachricht oder einen Befehl generiert, der durch ein übergeordnetes Softwaresystem des Logistiksystems erzeugt wird. Die Anfrageeinheit umfasst eine oder mehrere entsprechende Schnittstellen, um die Eingaben zu empfangen, welche dazu führen, dass die Versendungsanfrage generiert wird. Eine manuelle Eingabe kann beispielsweise durch Betätigung einer entsprechenden Schnellwahltaste auf einem Touchdisplay direkt an einem Flurförderzeug, insbesondere dem abzuholenden Folge-Flurförderzeug, erfolgen. Gemäß dieser Ausführungsform ist die Anfrageeinheit beispielsweise als eine funktionelle Einheit in der Fahrzeugsteuerung des Flurförderzeugs realisiert. Gemäß einer weiteren Ausführungsform ist die Anfrageeinheit als eine App auf einem mobilen Endgerät, beispielsweise einem Tablet, Smartphone oder dergleichen, realisiert. Dieses mobile Endgerät empfängt eine Eingabe von einem Benutzer und generiert die Versendungsanfrage. Zum Zweck der Übermittlung der Versendungsanfrage an die Anfragekoordinationseinheit steht das mobile Endgerät beispielsweise über eine separate Datenverbindung mit einer übergeordneten Zentralinstanz des Logistiksystems, beispielsweise einem Zentralrechner, oder auch mit der Fahrzeugsteuerung des Flurförderzeugs in kommunikationstechnischer Verbindung.

Die Übermittlung der Versendungsanfrage kann beispielsweise ausgehend von der Fahrzeugsteuerung des Folge-Flurförderzeugs an die in der Zentralinstanz des Logistiksystems implementierte Anfragekoordinationseinheit erfolgen. Alternativ kann die Versendungsanfrage ausgehend von einem mobilen Endgerät direkt an die Zentralinstanz übertragen werden. Ebenfalls denkbar ist, dass ein mobiles Endgerät als Anfrageeinheit über eine kurzreichweite Datenverbindung, beispielsweise eine Bluetooth-Verbindung oder dergleichen, mit dem Folge-Flurförderzeug in Verbindung steht, und auf diesem Wege die Versendungsanfrage ausgehend von dem mobilen Endgerät über das Folge-Flurförderzeug an die Zentralinstanz des Logistiksystems übertragen wird.

Die Versendungsanfrage hat bevorzugt stets die folgende Form: Fahrzeug [Fahrzeug-ID] von Punkt [A] zu Punkt [B], also beispielsweise [Fahrzeug-ID; A; B]. Als Fahrzeug-ID wird beispielsweise eine feste Fahrzeugkennung, eine innerhalb des Logistiksystems dem Fahrzeug zugeordnete Kennung oder eine Seriennummer des Fahrzeugs verwendet. Die Punkte A und B werden beispielsweise anhand ihrer Koordinaten in einem Logistikstandort festgelegt. Es ist ferner vorgesehen, dass es sich bei den Punkten A und B sowohl um zuvor festgelegte Punkte als auch um Bereiche oder Zonen handelt, denen beispielsweise bestimmte Funktionen zugeordnet sind. Beispielsweise kann es sich bei dem Punkt A um einen Parkbereich für Flurförderzeuge handeln und bei Punkt B um eine Ladestation oder einen Ladebereich. Die Versendungsanfrage kann sowohl auf der Grundlage der Position der Punkte A und B als auch anhand der Funktionen der jeweiligen Punkte oder Bereiche gestellt werden. Die Punkte können auf einer digitalen Karte, beispielsweise mittels einer dazu vorgesehenen App durch einen Mitarbeiter ausgewählt werden. Die entsprechenden Punkte können ebenso automatisiert durch ein übergeordnetes Softwaresystem, welches beispielsweise in einer Zentralinstanz implementiert ist, der Anfrageeinheit bereitgestellt werden. Ferner ist beispielsweise vorgesehen, dass ein Mitarbeiter nach Abschluss einer bestimmten Tätigkeit das Folge-Flurförderzeug an das übergeordnete Software-System übergibt. Dieses bestimmt mit Hilfe eines Lokalisierungssystems seine Position und meldet diese der Zentralinstanz. Diese definiert die übermittelte Position als Abholpunkt. Der Mitarbeiter kann ebenso eine Versendungsanfrage auf Grundlage der Funktionen verschiedener Bereiche generieren. Beispielsweise kann eine Anfrage generiert werden, die in etwa wie folgt lautet: [Fahrzeug-ID; Funktion Bereich A; Funktion Bereich B]. Ein Fahrzeug wird auf der Grundlage einer solchen Versendungsanfrage beispielsweise von einem Parkbereich zu einem Ladebereich geschickt. Sobald ein Führungs-Flurförderzeug verfügbar ist, wird der Anfrageeinheit dieses Flurförderzeugs der Abholpunkt als Ausgangspunkt übergeben und außerdem wird ein Ablieferungspunkt als Zielpunkt mitgeteilt. Der Ablieferungspunkt kann beispielsweise durch den Mitarbeiter festgelegt sein. Dieser hat beispielsweise eine Position definiert, an welcher die auf dem Folge-Flurförderzeug geladene Ware an eine weitere Logistikeinheit, beispielsweise einen Lkw oder dergleichen, übergeben werden.

Die Verfügbarkeit der Flurförderzeuge ist einem übergeordneten Softwaresystem des Logistiksystems, welche beispielsweise in der Zentralinstanz des Logistiksystems implementiert sein kann, bekannt. Die Verfügbarkeit der Flurförderzeuge kann einem Mitarbeiter in einer entsprechenden App, beispielsweise auf einem Tablet, Smartphone oder dergleichen, dargestellt werden. Dies erleichtert die Stellung entsprechender manueller Versendungsanfragen.

Die Anfahrtsumgebung umfasst insbesondere die jeweilige Zone bzw. den jeweiligen Punkt. Dies bedeutet, dass die Anfahrtsumgebung der Abholzone die Abholzone selbst bzw. den Abholpunkt selbst mit einschließen oder umschließen kann. Ebenso kann die Anfahrtsumgebung der Ablieferzone die Ablieferzone selbst bzw. den Ablieferpunkt selbst mit einschließen oder umschließen. Die Anfahrtsumgebung kann ebenso ein sich an die eigentliche Zone in deren Peripherie anschließender Randbereich sein, in den sich das Führungs-Flurförderzeug zur Abholung des Folge-Flurförderzeugs aus der Abholzone oder auch zu Ablieferung des Folge-Flurförderzeugs an einer Ablieferzone der entsprechenden Zone annähert. Gleiches gilt für die Annäherung an einen Abholpunkt bzw. einen Ablieferpunkt. Die Größe der Anfahrtsumgebung ist insbesondere so gewählt, dass das Umfeldüberwachungssystem des Führungs-Flurförderzeugs in der Lage ist, die jeweilige Zone, also die Abholzone oder die Ablieferzone, mit dem von dem Umfeldüberwachungssystem aufgespannten Umfeldüberwachungsbereich vollständig abzudecken. Gleiches gilt für den Ablieferpunkt bzw. den Abholpunkt. Vorteilhaft wird die in der Abholzone oder der Ablieferzone vorhandene Infrastruktur, beispielsweise Ladestationen oder dgl., durch den Betrieb des Führungs-Flurförderzeugs nicht beeinträchtigt. Der Ausgangspunkt und der Zielpunkt, zwischen denen sich das Führungs-Flurförderzeug in autonomer Fahrt bewegt, können insbesondere auch innerhalb der Abholzone bzw. innerhalb der Ablieferzone selbst liegen.

Gemäß einer weiteren Ausführungsform ist das Logistiksystem dadurch fortgebildet, dass das Führungs-Flurförderzeug ferner ein Identifikationssystem umfasst, welches dazu eingerichtet ist, ein bestimmtes Folge-Flurförderzeug als zur Fernsteuerung vorgesehenes Folge-Flurförderzeug zu identifizieren.

In einer Logistikumgebung, beispielsweise einem Logistikstandort, ist es in vielen Fällen so, dass sich innerhalb eines räumlich relativ begrenzten Bereiches ggf. eine große Anzahl von Flurförderzeugen befindet. Dies ist beispielsweise in einem Ladebereich der Fall, in welchem die Traktionsbatterien der Flurförderzeuge aufgeladen werden und beispielsweise eine große Anzahl von Flurförderzeugen nebeneinander in Ladestationen angeordnet ist. Eine hohe Dichte von Flurförderzeugen kann auch in einem Be- und Entladebereich, in dem Waren der Logistikeinrichtung beispielsweise an LKWs oder dergleichen übergeben werden, herrschen. Um in einer solchen Betriebssituation eine zuverlässige Zuordnung zwischen dem Führungs-Flurförderzeug und dem Folge-Flurförderzeug zu gewährleisten, ist es erforderlich, dass das Führungs-Flurförderzeug das Folge-Flurförderzeug, mit welchem es über die drahtlose Datenverbindung verbunden ist und welches es fernsteuert, eindeutig identifiziert.

Gemäß einer Ausführungsform erfolgt diese Identifikation beispielsweise, indem das Führungs-Flurförderzeug mithilfe seines Umfeldüberwachungssystems, beispielsweise einer von dem Umfeldüberwachungssystem umfassten Kamera mit entsprechender Orts- und Zeitauflösung, ein Tag, wie beispielsweise einen QR-Code oder dergleichen, an dem Folge-Flurförderzeug identifiziert. Aus einem solchen Tag kann beispielsweise eine Fahrzeugnummer, welche dem Führungs-Flurförderzeug von dem Folge-Flurförderzeug ebenfalls über die drahtlose Datenverbindung übermittelt wird, ausgelesen werden. Durch entsprechenden Abgleich dieser auf zwei Wegen erhaltenen Daten in dem Führungs-Flurförderzeug kann dieses das Folge-Flurförderzeug eindeutig identifizieren. Ebenfalls vorgesehen ist, dass das Führungs-Flurförderzeug zum Auslesen von drahtlosen Tags, beispielsweise eines kurzreichweitigen RFID-Tags, eingerichtet ist.

Gemäß einer weiteren Ausführungsform ist das Identifikationssystem des Führungs-Flurförderzeugs dazu eingerichtet, das Folge-Flurförderzeug auf der Grundlage einer Funktechnik, beispielsweise einer verhältnismäßig kurzreichweitigen Funkdatenübertragungsstrecke, zu identifizieren. Hierzu könnte beispielsweise Bluetooth oder auch Ultra-Wide-Band eingesetzt werden. Eine solche Technik erlaubt gleichzeitig eine Bestimmung der relativen Position des Folge-Flurförderzeugs zu dem Führungs-Flurförderzeug.

Verfügt das Folge-Flurförderzeug über ein eigenes Lokalisierungssystem, so kann das Führungs-Flurförderzeug das Folge-Flurförderzeug auch anhand seiner Position identifizieren. Zu diesem Zweck werden beispielsweise die aus dem Lokalisierungssystem des Folge-Flurförderzeugs ausgelesenen Positionsdaten mit Positionsdaten abgeglichen, welche das Führungs-Flurförderzeug mit Hilfe seines Umfeldüberwachungssystems bestimmt. Voraussetzung hierfür ist lediglich, dass die absolute Position, welche das Folge-Flurförderzeug mit seinem Lokalisierungssystem bestimmt, ausreichend genau ist.

Gemäß einer weiteren vorteilhaften Ausführungsform ist das Identifikationssystem des Führungs-Flurförderzeugs dazu eingerichtet, nach Herstellung der drahtlosen Datenverbindung zwischen dem Führungs-Flurförderzeug und dem bestimmten Folge-Flurförderzeug das bestimmte Folge-Flurförderzeug derart fernzusteuern, dass dieses eine Soll-Minimalbewegung ausführt. Von der Autonomie-Steuereinheit des Führungs-Flurförderzeugs werden die relativen Ortskoordinaten des bestimmten Folge-Flurförderzeugs vor und nach der Soll-Minimalbewegung abgefragt. Aus einem Vergleich der Ortskoordinaten vor und nach der Soll-Minimalbewegung kann eine Ist-Minimalbewegung des bestimmten Folge-Flurförderzeugs berechnet werden. Ist die Abweichung zwischen der Soll-Minimalbewegung und der Ist-Minimalbewegung geringer als ein vorgegebener Grenzwert, so wird das bestimmte Folge-Flurförderzeug, welches gerade die Minimalbewegung ausgeführt hat, als zur Fernsteuerung vorgesehenes Folge-Flurförderzeug identifiziert.

Das Führungs-Flurförderzeug kann ferner insbesondere dazu eingerichtet sein, festzustellen, ob sich in seinem Umfeld noch weitere Führungs-Flurförderzeuge befinden, welche ebenfalls einen Kopplungsvorgang mit einem Folge-Flurförderzeug durchführen. Dies kann beispielsweise durch eine Abfrage bei einer übergeordneten Zentralinstanz, beispielsweise einem Zentralrechner des Logistiksystems, erfolgen. Sollte der Fall vorliegen, dass mehrere Führungs-Flurförderzeuge in räumlich geringem Abstand zueinander Kopplungsvorgänge durchführen, so kann die Zentralinstanz diese Kopplungsvorgänge zeitlich nacheinander gruppieren. Mit anderen Worten wird in einem solchen Fall ein erstes Führungs-Flurförderzeug festgelegt, welches zuerst den Kopplungsvorgang durchführt und abschließt. Anschließend wird dem zweiten Führungs-Flurförderzeug von der Zentralinstanz signalisiert, dass dieses nun seinen Kopplungsvorgang starten kann. Auf diese Weise wird vermieden, dass die Kopplungsvorgänge aufgrund von Verwechslungen fehlschlagen. Das Führungs-Flurförderzeug steuert zur Kopplung das Folge-Flurförderzeug zur Durchführung einer Soll-Minimalbewegung an. Die Bewegung wird während das definierten Zeitfensters detektiert, sodass anschließend ein weiteres Flurförderzeug, welches sich gegebenenfalls in der Umgebung befindet, mit seinem Kopplungsvorgang starten kann.

Ferner ist insbesondere vorgesehen, dass als Soll-Minimalbewegung ein vorgegebenes Muster verwendet wird, welches für das Führungs-Flurförderzeug charakteristisch ist. Beispielsweise ist dieses Bewegungsmuster statistisch oder für das betreffende Führungs-Flurförderzeug charakteristisch, also im vornherein festgelegt. So kann die Soll-Minimalbewegung, mit welcher das Führungs-Flurförderzeug das zu koppelnde Folge-Flurförderzeug ansteuert, von einer weiteren Soll-Minimalbewegung, mit der eines der weiteren Führungs-Flurförderzeug ein weiteres Folge-Flurförderzeug ansteuert, unterschieden werden. Auch auf diese Weise können Verwechslungen vermieden werden. Ein bestimmter Typ einer Minimalbewegung ist beispielsweise eine Fahrt des Folge-Flurförderzeugs um eine vorbestimmte Strecke, welche insbesondere im Bereich weniger Zentimeter liegt.

Beispielsweise kann ein erstes Führungs-Flurförderzeug das zu koppelnde Folge-Flurförderzeug zur Durchführung einer Soll-Minimalbewegung ansteuern, welche in 5 cm Geradeausfahrt in Vorwärtsrichtung besteht. Das zweite Führungs-Flurförderzeug steuert hingegen das zu koppelnde Folge-Flurförderzeug zur Durchführung einer Soll Minimalbewegung an, welche in 10 cm Geradeausfahrt in Rückwärtsrichtung besteht. Diese beiden Führungs-Flurförderzeuge können ihre jeweils zu koppelnden Folge-Flurförderzeuge anhand der jeweils durchgeführten Soll-Minimalbewegung problemlos unterscheiden, sodass in einem solchen Fall die Kopplungsvorgänge sogar gleichzeitig durchgeführt werden können.

Gemäß den vorgenannten, beschriebenen Funktionen des Identifikationssystems kann eine eindeutige Zuordnung zwischen dem Führungs-Flurförderzeug und dem Folge-Flurförderzeug sichergestellt werden. Vorteilhaft müssen an den Flurförderzeugen zu diesem Zweck keine Veränderungen vorgenommen werden.

Gemäß einer weiteren vorteilhaften Ausführungsform ist das Logistiksystem dadurch fortgebildet, dass die Kommunikationseinheit des Führungs-Flurförderzeugs und die Kommunikationseinheit des Folge-Flurförderzeugs dazu eingerichtet sind, Steuerbefehle zur Fernsteuerung des Folge-Flurförderzeugs über die drahtlose Datenverbindung mit einer Latenzzeit zu übertragen, welche geringer ist als eine interne Latenzzeit der in dem Folge-Flurförderzeug auf einer internen Datenverbindung, insbesondere auf einem internen Datenbus, kommunizierten, aus den Steuerbefehlen umgesetzten, internen Steuerbefehle. Insbesondere ist die Latenzzeit der auf der drahtlosen Datenverbindung übertragenen Daten kleiner oder gleich 100 ms, ferner insbesondere kleiner oder gleich 50 ms, ferner insbesondere kleiner oder gleich 20 ms, ferner insbesondere kleiner oder gleich 10 ms und ferner insbesondere kleiner oder gleich 5 ms.

Die Latenzzeit der drahtlosen Datenverbindung zwischen dem Führungs-Flurförderzeug und dem Folge-Flurförderzeug ist mit anderen Worten geringer als die Latenzzeit der internen Datenkommunikation innerhalb des Folge-Flurförderzeugs. Auf diese Art und Weise kann per Echtzeit-Drahtlos-Kommunikation das Führungs-Flurförderzeug mit dem Folge-Flurförderzeug kommunizieren. So ist eine zuverlässige und präzise Steuerung des Folge-Flurförderzeugs durch das Führungs-Flurförderzeug sichergestellt.

Die angegebenen oberen Schranken für die Latenzzeiten stellen sicher, dass die Daten nach einer bekannten Zeit beim Empfänger angekommen sind und garantiert den Determinismus des Systems. So wird die Kommunikation zu einer Echtzeit-Drahtloskommunikation. Für eine leistungsfähige Fernsteuerung des Folge-Flurförderzeugs ist es vorteilhaft, dass die Latenzzeit sowohl unterhalb der angegebenen Grenzen liegt als auch die Latenzzeit der drahtlosen Kommunikation geringer ist als die Latenzzeit der internen Datenkommunikation des Folge-Flurförderzeugs. Außerdem ist vorteilhaft, wenn für die drahtlose Datenverbindung ein Datenkommunikationsstandard verwendet wird, welcher eine hohe Zuverlässigkeit der Datenübertragung aufweist und sich durch eine geringe Paketverlustrate auszeichnet.

Gemäß einer vorteilhaften Weiterbildung ist die Kommunikationseinheit des Führungs-Flurförderzeugs und/oder des Folge-Flurförderzeugs dazu eingerichtet, sofern die Latenzzeit der auf der drahtlosen Datenverbindung übertragenen Daten einen vorgegebenen Grenzwert überschreitet oder die drahtlose Datenverbindung unterbrochen ist, einer Fahrzeugsteuerung ein Notsignal zu übermitteln. Die Fahrzeugsteuerung ist dazu eingerichtet, in Reaktion auf das Notsignal das Führungs-Flurförderzeug bzw. das Folge-Flurförderzeug in einen sicheren Betriebszustand zu versetzen. Beispielsweise versetzt die Fahrzeugsteuerung in Reaktion auf das Notsignal das Führungs-Flurförderzeug bzw. das Folge-Flurförderzeug in den Stillstand. Dieser Betriebszustand wird erst unterbrochen, wenn wieder eine zuverlässige Datenkommunikation zwischen dem Führungs-Flurförderzeug und dem Folge-Flurförderzeug hergestellt ist. Auf diese Weise wird sichergestellt, dass das Führungs-Flurförderzeug das Folge-Flurförderzeug nicht verliert. Außerdem führt eine Unterbrechung der drahtlosen Datenverbindung zu einem sicheren Zustand des Fahrzeugkonvois und die Fahrt im Konvoi kann nach wiederhergestellter drahtloser Datenkommunikation fortgesetzt werden.

Die Aufgabe wird ferner gelöst durch einen Nachrüstsatz für ein Flurförderzeug, welcher eine Kommunikationseinheit und eine Steuereinheit umfasst. Die Kommunikationseinheit ist dazu eingerichtet, eine drahtlose Datenverbindung mit einem Führungs-Flurförderzeug zu betreiben und über die Datenverbindung Steuerdaten zur Fernsteuerung des Flurförderzeugs zu empfangen. Die Steuereinheit umfasst außerdem eine Schnittstelle zu einer Fahrzeugsteuerung des Flurförderzeugs. Die von der Kommunikationseinheit über die drahtlose Datenverbindung empfangenen Steuerdaten werden von der Steuereinheit in Fahrbefehle für das Flurförderzeug umgewandelt und an der Schnittstelle bereitgestellt. Die Kommunikationseinheit und die Steuereinheit sind dementsprechend eingerichtet. Mit Hilfe des Nachrüstsatzes ist das Flurförderzeug, welches mit einem solchen Nachrüstsatz ausgerüstet wird, als Folge-Flurförderzeug in einem Logistiksystem gemäß einem oder mehreren der zuvor genannten Ausführungsformen betreibbar.

Insbesondere ist im Hinblick auf die Notstoppeigenschaften des Führungs-Flurförderzeugs und des Folge-Flurförderzeugs von der verwendeten Schnittstelle zu fordern, dass diese eine sichere und zuverlässige Übertragung der Notsignale erlaubt.

Vorteilhaft kann mithilfe des Nachrüstsatzes gemäß Aspekten der Erfindung ein gänzlich für den autonomen Fahrbetrieb ungeeignetes weil nicht entsprechend ausgerüstetes Flurförderzeug als Folge-Flurförderzeug aufgerüstet werden. Dies ist für Flurförderzeuge älteren Baujahrs vorteilhaft. Das einzige technische Erfordernis, welches solche Flurförderzeuge erfüllen müssen, ist eine entsprechende Schnittstelle an der Fahrzeugsteuerung. Bei der Schnittstelle handelt es sich beispielsweise um eine CAN-Bus Schnittstelle oder eine andere übliche Schnittstelle.

Im Übrigen treffen auf ein mit einem solchen Nachrüstsatz als Folge-Flurförderzeug ertüchtigtes Flurförderzeug gleiche oder ähnliche Vorteile zu, wie sie bereits im Hinblick auf das zuvor beschriebene Logistiksystem selbst erwähnt wurden.

Das Folge-Flurförderzeugs muss lediglich, sofern es nicht mit einem Nachrüstsatz ausgerüstet werden soll, mit einer drahtlosen Kommunikationseinheit ausgestattet sein. Ferner muss ein Steuerungsrechner vorhanden sein, sei er bereits in der Fahrzeugsteuerung vorhanden oder als funktionelle Einheit implementiert oder durch die Steuereinheit des Nachrüstsatzes bereitgestellt. Der Steuerungsrechner setzt die zur Fernsteuerung des Folge-Flurförderzeugs übertragenen Fahrbefehle beispielsweise in Radgeschwindigkeiten und Lenkwinkel um. Der zuvor genannte Nachrüstsatz kann außer über eine CAN-Bus Schnittstelle auch über eine andere Schnittstelle, beispielsweise industrielles Ethernet (Ethercat, Profinet, Powerlink, etc.), an die Fahrzeugsteuerung angeschlossen werden. Personenschutzeinrichtungen, wie beispielsweise das Umfeldüberwachungssystem, sowie die gesamte Autonomie- und Navigationshardware befinden sich lediglich in dem Führungs-Flurförderzeug.

Die Aufgabe wird außerdem gelöst durch ein Verfahren zum Betreiben eines Logistiksystems, wobei
- das Logistiksystem ein Führungs-Flurförderzeug und zumindest ein Folge-Flurförderzeug umfasst,
- das Führungs-Flurförderzeug im autonomen Fahrbetrieb und das zumindest eine Folge-Flurförderzeug im nicht autonomen Fahrbetrieb betrieben werden,
- das Führungs-Flurförderzeug ein Umfeldüberwachungssystem umfasst, welches einen Umfeldüberwachungsbereich aufspannt, wobei das Führungs-Flurförderzeug und das zumindest eine Folge-Flurförderzeug jeweils eine Kommunikationseinheit aufweisen, die eine drahtlose Datenverbindung betreiben, und das Führungs-Flurförderzeug das zumindest eine Folge-Flurförderzeug ferner über die drahtlose Datenverbindung fernsteuert,
- das Führungs-Flurförderzeug eine Autonomie-Steuereinheit umfasst, die das Folge-Flurförderzeug entlang einer Sollbahn steuert und zur Steuerung des Folge-Flurförderzeugs eine Position und eine Orientierung des Folge-Flurförderzeugs in Bezug auf das Führungs-Flurförderzeug bestimmt, wobei
- die Autonomie-Steuereinheit das Folge-Flurförderzeug derart fernsteuert, dass sich das Folge-Flurförderzeug während seiner Fahrt entlang der Sollbahn stets innerhalb des Umfeldüberwachungsbereichs des Führungs-Flurförderzeugs befindet.

Auf das Verfahren zum Betreiben eines Logistiksystems treffen gleiche oder ähnliche Vorteile zu, wie sie bereits im Hinblick auf das Logistiksystem selbst erwähnt wurden, so dass auf Wiederholungen verzichtet werden soll.

Gemäß einer Ausführungsform ist das Verfahren vorteilhaft dadurch fortgebildet, dass die Autonomie-Steuereinheit des Führungs-Flurförderzeugs die Position und die Orientierung des Folge-Flurförderzeugs in Bezug auf das Führungs-Flurförderzeug durch Auswertung von Sensordaten des Umfeldüberwachungssystems und/oder durch Auswertung von internen Parametern aus einer Fahrzeugsteuerung des Folge-Flurförderzeugs bestimmt.

Ferner ist insbesondere vorgesehen, dass das Führungs-Flurförderzeug von einem Ausgangspunkt zu einem Zielpunkt steuert und insbesondere während dieser Fahrt das zumindest eine Folge-Flurförderzeug innerhalb des Umfeldüberwachungsbereichs des Führungs-Flurförderzeugs in Formation mit dem Führungs-Flurförderzeug fahrend steuert.

Ferner ist das Verfahren insbesondere dadurch fortgebildet, dass die Autonomie-Steuereinheit für die Fahrt vom Ausgangspunkt zum Zielpunkt eine von dem Führungs-Flurförderzeug abzufahrende Führungsbahn und eine von dem Folge-Flurförderzeugs abzufahrende Sollbahn berechnet.

Gemäß einer weiteren vorteilhaften Ausführungsform ist das Verfahren dadurch fortgebildet, dass ferner ein Anfragesystem, umfassend eine Anfrageeinheit und eine Anfragekoordinationseinheit umfasst ist. Die Anfrageeinheit generiert eine ein bestimmtes Folge-Flurförderzeug betreffende Versendungsanfrage, wobei die Versendungsanfrage Informationen betreffend eine Abholzone oder einen Abholpunkt und eine Ablieferzone oder einen Ablieferpunkt umfasst, und wobei das betreffende Folge-Flurförderzeug von der Abholzone oder dem Abholpunkt zu der Ablieferzone oder dem Ablieferpunkt zu transportieren ist. Die Anfragekoordinationseinheit empfängt die Versendungsanfrage von der Anfrageeinheit und stellt fest, ob das Führungs-Flurförderzeug verfügbar ist. Sofern dieses verfügbar ist teilt sie der Autonomie-Steuereinheit des Führungs-Flurförderzeugs einen innerhalb einer Anfahrtsumgebung der Abholzone oder des Abholpunkts gelegenen Ort als Ausgangspunkt und einen innerhalb einer Anfahrumgebung der Ablieferzone oder des Ablieferpunkts gelegenen Ort als Zielpunkt mit.

Gemäß einer weiteren vorteilhaften Ausführungsform ist das Verfahren dadurch fortgebildet, dass das Führungs-Flurförderzeug ferner ein Identifikationssystem umfasst und ein bestimmtes Folge-Flurförderzeug mit diesem Identifikationssystem als zum fernsteuern vorgesehenes Folge-Flurförderzeug identifiziert.

Gemäß einer vorteilhaften Weiterbildung dieses Verfahrens ist insbesondere vorgesehen, dass das Identifikationssystem nach Herstellung der drahtlosen Datenverbindung zwischen dem Führungs-Flurförderzeug und dem bestimmten Folge-Flurförderzeug das bestimmte Folge-Flurförderzeug derart fernsteuert, dass dieses eine Soll-Minimalbewegung ausführt, und von der Autonomie-Steuereinheit die relativen Ortskoordinaten des bestimmten Folge-Flurförderzeugs vor und nach der Soll-Minimalbewegung abgefragt werden und aus einem Vergleich der Ortkoordinaten vor und nach der Soll-Minimalbewegung eine Ist-Minimalbewegung des bestimmten Folge-Flurförderzeugs berechnet wird, und sofern eine Abweichung zwischen der Soll-Minimalbewegung und der Ist-Minimalbewegung geringer als ein vorgegebener Grenzwert ist, das bestimmte Folge-Flurförderzeug als zur Fernsteuerung vorgesehenes Folge-Flurförderzeug identifiziert wird.

Eine weitere vorteilhafte Ausführungsform des Verfahrens sieht vor, dass die Kommunikationseinheit des Führungs-Flurförderzeugs und die Kommunikationseinheit des Folge-Flurförderzeugs Steuerbefehle zur Fernsteuerung des Folge-Flurförderzeugs über die drahtlose Datenverbindung mit einer Latenzzeit übertragen, welche geringer ist als eine interne Latenzzeit, mit der in dem Folge-Flurförderzeug auf einer internen Datenleitung, insbesondere einem internen Datenbus, die aus den Steuerbefehlen umgesetzten internen Steuerbefehle kommuniziert werden. Insbesondere ist die Latenzzeit der auf der drahtlosen Datenverbindung übertragenen Daten kleiner oder gleich 100 ms, ferner insbesondere kleiner oder gleich 50 ms, ferner insbesondere kleiner oder gleich 20 ms, ferner insbesondere kleiner oder gleich 10 ms und ferner insbesondere kleiner oder gleich 5 ms.

Ferner ist das Verfahren insbesondere dadurch fortgebildet, dass die Kommunikationseinheit des Führungs-Flurförderzeugs und/oder des Folge-Flurförderzeugs, sofern die Latenzzeit der auf der drahtlosen Datenverbindung übertragenen Daten einen vorgegebenen Grenzwert überschreitet oder die drahtlose Datenverbindung unterbrochen ist, einer Fahrzeugsteuerung ein Notsignal übermittelt, und die Fahrzeugsteuerung in Reaktion auf das Notsignal das Führungs-Flurförderzeug und/oder das Folge-Flurförderzeug in einen sicheren Betriebszustand versetzt.

Gemäß einer weiteren Ausführungsform ist vorgesehen, dass das Führungs-Flurförderzeug in einem autonomen Fahrbetrieb nach Automatisierungsgrad 4 oder höher betrieben wird und das Folge-Flurförderzeug in einem autonomen Fahrbetrieb nach Automatisierungsgrad 3 oder geringer, insbesondere in einem autonomen Fahrbetrieb nach Automatisierungsgrad 2 oder geringer, ferner insbesondere in einem autonomen Fahrbetrieb nach Automatisierungsgrad 1 oder geringer betrieben wird und/oder das Folge-Flurförderzeug keinen Umfeldüberwachungsbereich aufspannt, in dem ein Personenschutz gewährleistet ist, insbesondere keinen Umfeldüberwachungsbereich aufspannt.

Die Aufgabe wird ferner gelöst durch ein Verfahren zum Transportieren eines Flurförderzeugs in einem Logistiksystem. Das Logistiksystem umfasst zumindest ein Führungs-Flurförderzeug und zumindest ein Folge-Flurförderzeug. Das zumindest eine Führungs-Flurförderzeug ist für den autonomen Fahrbetrieb ausgerüstet und eingerichtet. Das zumindest eine Folge-Flurförderzeug ist nicht für den autonomen Fahrbetrieb ausgerüstet und eingerichtet. Das Führungs-Flurförderzeug umfasst ein Umfeldüberwachungssystem, welches einen Umfeldüberwachungsbereich aufspannt. Das Führungs-Flurförderzeug und das Folge-Flurförderzeug weisen jeweils eine Kommunikationseinheit auf, die dazu eingerichtet sind, zwischen dem Führungs-Flurförderzeug und dem Folge-Flurförderzeug eine drahtlose Datenverbindung zu betreiben. Das Führungs-Flurförderzeug und das Folge-Flurförderzeug sind ferner dazu eingerichtet, dass das Führungs-Flurförderzeug das Folge-Flurförderzeug über die drahtlose Datenverbindung fernsteuert. Das Führungs-Flurförderzeug umfasst eine Autonomie-Steuereinheit, die dazu eingerichtet ist, das Folge-Flurförderzeug entlang einer Sollbahn zu steuern. Diese Sollbahn kann von dem Führungs-Flurförderzeug selbst festgelegt oder berechnet werden. Alternativ empfängt das Führungs-Flurförderzeug die Daten der Trajektorie der Sollbahn von einer übergeordneten Zentralinstanz des Logistiksystems. Zur Steuerung des Folge-Flurförderzeugs bestimmt das Führungs-Flurförderzeug eine Position und eine Orientierung des Folge-Flurförderzeugs in Bezug auf das Führungs-Flurförderzeug. Die Autonomie-Steuereinheit des Führungs-Flurförderzeugs ist ferner dazu eingerichtet, das Folge-Flurförderzeug derart fernzusteuern, dass sich das Folge-Flurförderzeug während seiner Fahrt entlang der Sollbahn stets innerhalb des Umfeldüberwachungsbereichs des Führungs-Flurförderzeugs befindet.

Außerdem ist die Autonomie-Steuereinheit des Führungs-Flurförderzeugs ferner dazu eingerichtet, das Führungs-Flurförderzeug von einem Ausgangspunkt zu einem Zielpunkt zu steuern und insbesondere während dieser Fahrt das zumindest eine Folge-Flurförderzeug innerhalb des Umfeldüberwachungsbereichs des Führungs-Flurförderzeugs in Formation mit dem Führungs-Flurförderzeug fahrend fern zu steuern.

Das Logistiksystem, in dem das erfindungsgemäße Verfahren zum Transportieren des Flurförderzeugs durchgeführt wird, umfasst ferner ein Anfragesystem, welches eine Anfrageeinheit und eine Anfragekoordinationseinheit umfasst. Die Anfrageeinheit ist dazu eingerichtet, eine ein bestimmtes Folge-Flurförderzeug betreffende Versendungsanfrage zu generieren, wobei die Versendungsanfrage Informationen betreffend eine Ablieferzone oder einen Ablieferpunkt umfasst, wobei das bestimmte Folge-Flurförderzeug zu der Ablieferzone oder dem Ablieferpunkt zu transportieren ist.

Das erfindungsgemäße Verfahren zum Transportieren eines Flurförderzeugs umfasst die folgenden Merkmale:
- Generieren einer Versendungsanfrage betreffend den Transport des bestimmten Folge-Flurförderzeugs in die Ablieferzone oder zu einem Ablieferpunkt, an der Anfrageeinheit, und Übermittlung der Versendungsanfrage an die Anfragekoordinationseinheit,
- Koppeln des Führungs-Flurförderzeugs mit dem bestimmten Folge-Flurförderzeug, indem eine drahtlose Datenverbindung zwischen der Kommunikationseinheit des Führungs-Flurförderzeugs und der Kommunikationseinheit des bestimmten Folge-Flurförderzeugs hergestellt wird,
- Übermitteln eines innerhalb einer Anfahrtsumgebung der Ablieferzone oder des Ablieferpunkts gelegenen Orts als Zielpunkt an die Autonomie-Steuereinheit des Führungs-Flurförderzeugs, durch die Anfragekoordinationseinheit,
- autonomes Fahren des Führungs-Flurförderzeugs zum Zielpunkt, durch die Autonomie-Steuereinheit des Führungs-Flurförderzeugs, wobei die Autonomie-Steuereinheit während dieser Fahrt das bestimmte Folge-Flurförderzeug innerhalb des Umfeldüberwachungsbereichs des Führungs-Flurförderzeugs fahrend fernsteuert,
- Abstellen des bestimmten Folge-Flurförderzeugs in der Ablieferzone oder an dem Ablieferpunkt.

Mit einem solchen Verfahren kann ein nicht für den autonomen Betrieb ausgerüstetes und eingerichtetes Flurförderzeug innerhalb einer Logistikeinrichtung an den gewünschten Zielort gebracht werden.

Gemäß einer vorteilhaften Ausführungsform ist das Verfahren dadurch fortgebildet, dass vor dem Schritt des Koppelns des Führungs-Flurförderzeugs mit dem bestimmten Folge-Flurförderzeug dem Führungs-Flurförderzeug ein innerhalb einer Anfahrtsumgebung der Abholzone oder des Abholpunkts gelegener Ort als Zielpunkt für eine Abholfahrt übermittelt wird und das Führungs-Flurförderzeug in autonomer Fahrt zu dem Zielpunkt fährt.

Die Anfragekoordinationseinheit ist insbesondere dazu eingerichtet, die Versendungsanfrage von der Anfrageeinheit zu empfangen und festzustellen, ob das Führungs-Flurförderzeug verfügbar ist. Sofern dieses verfügbar ist wird der Autonomie-Steuereinheit des Führungs-Flurförderzeugs ein innerhalb einer Anfahrtsumgebung der Abholzone oder des Abholpunkts gelegener Ort als Zielpunkt für die Abholfahrt übermittelt.

In diesem Zusammenhang ist insbesondere vorgesehen, dass in der Versendungsanfrage eine Information darüber enthalten ist, ob es sich bei dem abzuholenden Folge-Flurförderzeug um ein beladenes oder um ein unbeladenes Flurförderzeug handelt. Sofern es sich bei dem Folge-Flurförderzeug um ein beladenes Flurförderzeug handelt, kann das Führungs-Flurförderzeug auf der Abholfahrt direkt ein leeres Flurförderzeug mitbringen. Um diese Funktionalität zu gewährleisten wird beispielsweise von der übergeordneten Zentralinstanz die Versendungsanfrage für die Abholfahrt entsprechend angepasst. Beispielsweise wird die Abholfahrt dahingehend erweitert, dass als ein weiterer Zielpunkt dieser Abholfahrt ein in einer Anfahrtsumgebung eines Abholbereichs, in welchem sich leere Flurförderzeuge befinden, gelegener Ort, hinzugefügt wird.

Gemäß einer weiteren vorteilhaften Ausführungsform ist das Verfahren dadurch fortgebildet, dass als Abholpunkt ein aktueller Standort des bestimmten Folge-Flurförderzeugs oder als Abholzone eine aktuelle Aufenthaltszone des Folge-Flurförderzeugs festgelegt wird.

Sofern das bestimmte Folge-Flurförderzeug über ein eigenes Positionserfassungssystem verfügt, kann dieses den Abholpunkt oder die Abholzone selbstständig bestimmen und in die Versendungsanfrage integrieren.

Mithilfe eines solchen Verfahrens kann in einem Logistiksystem eine große Anzahl von Flurförderzeugen, welche nicht für den autonomen Fahrbetrieb ausgerüstet und eingerichtet sind, dennoch autonom zwischen einer Abholzone und einer Ablieferzone bewegt werden. Dies stellt einen erheblichen kommerziellen Vorteil dar, da auf diese Weise nicht alle in dem Logistiksystem betriebenen Flurförderzeuge für den autonomen Fahrbetrieb ausgerüstet und eingerichtet werden müssen.

Im Übrigen treffen auf ein solches Verfahren zum Transportieren von Flurförderzeugen in einem Logistiksystem die im Hinblick auf das Logistiksystem selbst erwähnten Vorteile zu, sodass auf Wiederholungen verzichtet werden kann.

Außerdem wird die Aufgabe gelöst durch ein Computerprogrammprodukt, welches ein Logistiksystem nach einer oder mehreren der zuvor genannten Ausführungsformen dazu veranlasst, das Verfahren nach einer oder mehreren der zuvor genannten Ausführungsformen auszuführen.

Auch auf das Computerprogrammprodukt treffen gleiche oder ähnliche Vorteile zu, wie sie bereits im Hinblick auf das Logistiksystem selbst erwähnt wurden, so dass auf Wiederholungen verzichtet werden soll.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Im Rahmen der Erfindung sind Merkmale, die mit "insbesondere" oder "vorzugsweise" gekennzeichnet sind, als fakultative Merkmale zu verstehen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: ein Logistiksystem, umfassend ein Führungs-Flurförderzeug und ein Folge-Flurförderzeug, in schematisch vereinfachter Darstellung,
- Fig. 2: ein Führungs-Flurförderzeug und ein Folge-Flurförderzeug in Kolonnenfahrt, ebenfalls in schematisch vereinfachter Darstellung,
- Fig. 3: eine schematisch vereinfachte Ansicht eines Logistiksystems und
- Fig. 4a, 4b: schematische vereinfachte Detailansichten, welche die Ablieferung eines Folge-Flurförderzeugs durch ein Führungs-Flurförderzeug in einer Ablieferzone illustrieren.

**In** den Zeichnungen sind jeweils gleiche oder gleichartige Elemente und/oder Teile mit denselben Bezugsziffern versehen, so dass von einer erneuten Vorstellung jeweils abgesehen wird.

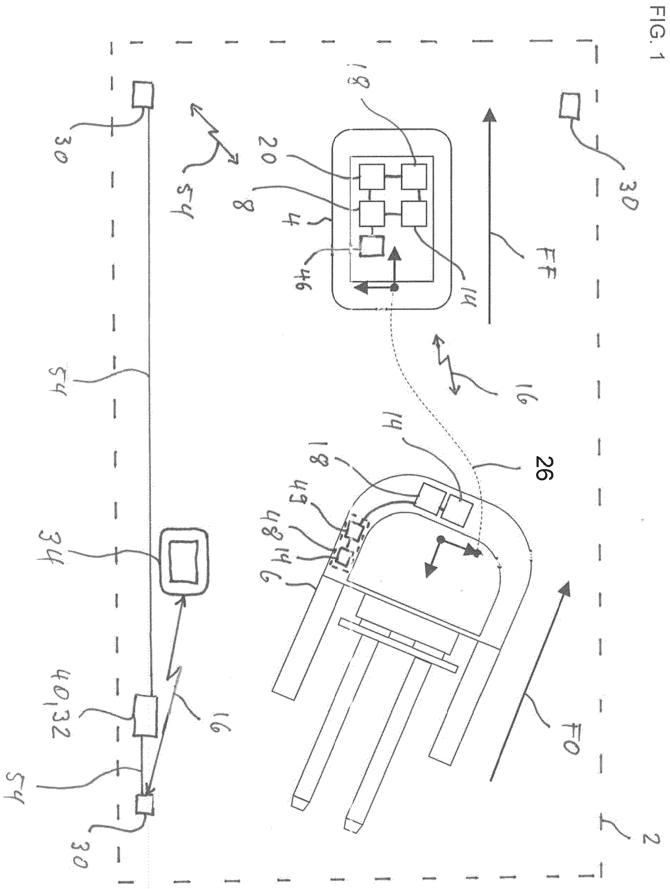

Fig. 1 zeigt ein Logistiksystem 2, welches ein Führungs-Flurförderzeug 4 und ein Folge-Flurförderzeug 6 umfasst. Lediglich beispielhaft ist ein einziges Führungs-Flurförderzeug und ein einziges Folge-Flurförderzeug 6 dargestellt, die nachfolgenden Ausführungen gelten in gleicher Weise für ein Logistiksystem 2, in dem mehrere Führungs-Flurförderzeuge und mehrere Folge-Flurförderzeuge 6 vorhanden sind. Das Führungs-Flurförderzeug 4 ist für den autonomen Fahrbetrieb ausgestattet bzw. ausgerüstet und eingerichtet. Dies bedeutet, dass das Führungs-Flurförderzeug 4 zum Betrieb mit einem Automatisierungsgrad von 4 (Level 4) oder höher ausgerüstet und eingerichtet ist, wobei die allgemein übliche Definition gemäß SAE-Standard J3016 zur Anwendung kommt. Das Folge-Flurförderzeug 6 ist nicht für den autonomen Fahrbetrieb ausgerüstet und eingerichtet und weist dementsprechend einen Automatisierungsgrad betreffend die Fähigkeit zum autonomen Fahren von 3 (Level 3) oder geringer auf, wobei wiederum der oben genannte Standard zur Anwendung kommt. Das Folge-Flurförderzeug 6 weist also beispielsweise einen Automatisierungsgrad von 2 (Level 2) oder von 1 (Level 1) auf oder ist nicht für den autonomen Fahrbetrieb ausgerüstet und eingerichtet. Entscheidend ist, dass das Folge-Flurförderzeug 6 fernsteuerbar ist, also beispielsweise über eine entsprechende Schnittstelle an einer Fahrzeugsteuerung verfügt, über die beispielsweise Radgeschwindigkeiten und/oder ein Lenkwinkel einstellbar sind. Hierauf wird weiter unten detaillierter eingegangen.

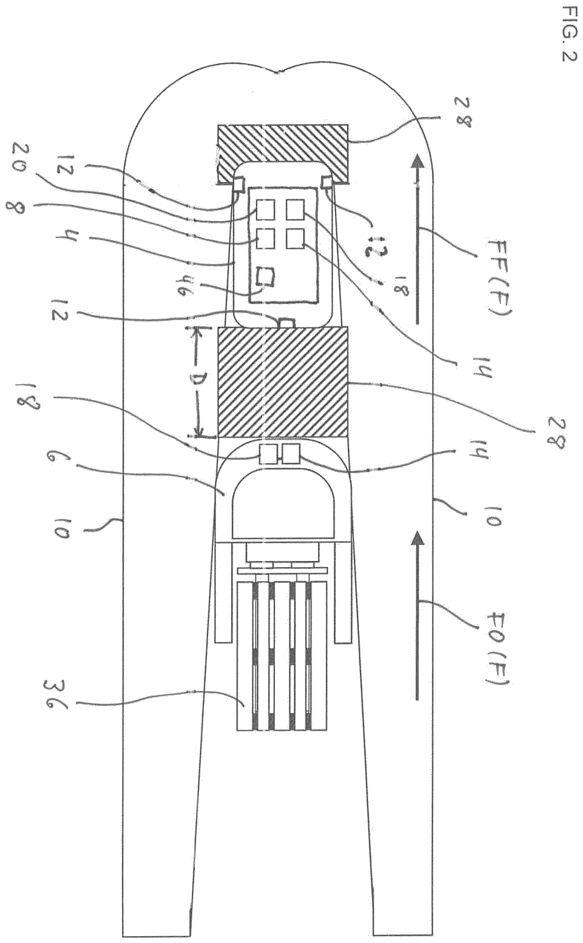

Das Führungs-Flurförderzeug 4 umfasst ein Umfeldüberwachungssystem 8, welches einen Umfeldüberwachungsbereich 10 (vgl. auch Fig. 2) aufspannt. Das Umfeldüberwachungssystem 8 umfasst zu diesem Zweck eine umfassende Sensorik. Beispielhaft und schematisch sind einige Sensoren 12 an dem Führungs-Flurförderzeug 4 dargestellt, bei denen es sich beispielsweise um Kameras, Laserscanner, Lidarscanner, Radarsensoren, Ultraschallsensoren oder dergleichen handelt. Bei dem Umfeldüberwachungsbereich 10 handelt es sich beispielsweise um ein Warnfeld, ein Schutzfeld, einen Personenschutzbereich oder einen Maschinenschutzbereich.

Das Führungs-Flurförderzeug 4 und das Folge-Flurförderzeug 6 umfassen ferner jeweils eine Kommunikationseinheit 14, wobei diese Kommunikationseinheit 14 dazu eingerichtet ist, zwischen dem Führungs-Flurförderzeug 4 und dem Folge-Flurförderzeug 6 eine drahtlose Datenverbindung 16 zu etablieren und zu betreiben. Die drahtlose Datenverbindung 16 ist insbesondere eine Funkdatenverbindung, die gemäß einem der üblichen und allgemein bekannten Funkdatenübertragungsstandards betrieben wird, beispielsweise auf der Grundlage von WLAN, Bluetooth, Ultra-Wide-Band oder dergleichen.

Es kann ebenso vorgesehen sein, dass alternativ oder zusätzlich zu einem dieser Funkdatenübertragungsstandards die drahtlose Datenverbindung 16 zwischen den Kommunikationseinheiten 14 der Flurförderzeuge 4, 6 auf der Grundlage von im sichtbaren oder im unsichtbaren Bereich liegenden Lichtsignalen erfolgt. Zu diesem Zweck werden beispielsweise die an den Flurförderzeugen 4, 6 vorhandenen Lichtsignale, wie beispielsweise Fahrlichter, Bremslichter, Fahrtrichtungsanzeiger, Warnleuchten oder dergleichen, verwendet. Dies gilt für eine Übertragung im sichtbaren Bereich. Soll die Datenübertragung per Lichtzeichen im nicht sichtbaren Bereich erfolgen, können an den Flurförderzeugen 4, 6 spezielle Emitter und Empfänger angebracht werden. Eine Datenfolge wird beispielsweise durch entsprechendes Ein- und Ausschalten eines oder mehrerer dieser Lichter oder Leuchten codiert. Der Empfang der Daten erfolgt über eine Detektion der Lichtzeichen, beispielsweise mithilfe einer am jeweils empfangenden Flurförderzeug 4, 6 vorhandenen Kamera oder durch einen oder mehrere spezielle Empfänger. Die zur Datenübertragung verwendeten Modulationsfrequenzen der Lichtzeichen können so groß gewählt werden, dass der für das menschliche Auge sichtbare Eindruck der Lichtzeichen unverändert bleibt. Denkbar ist beispielsweise eine Amplitudenmodulation der Lichtzeichen im Kiloherzbereich.

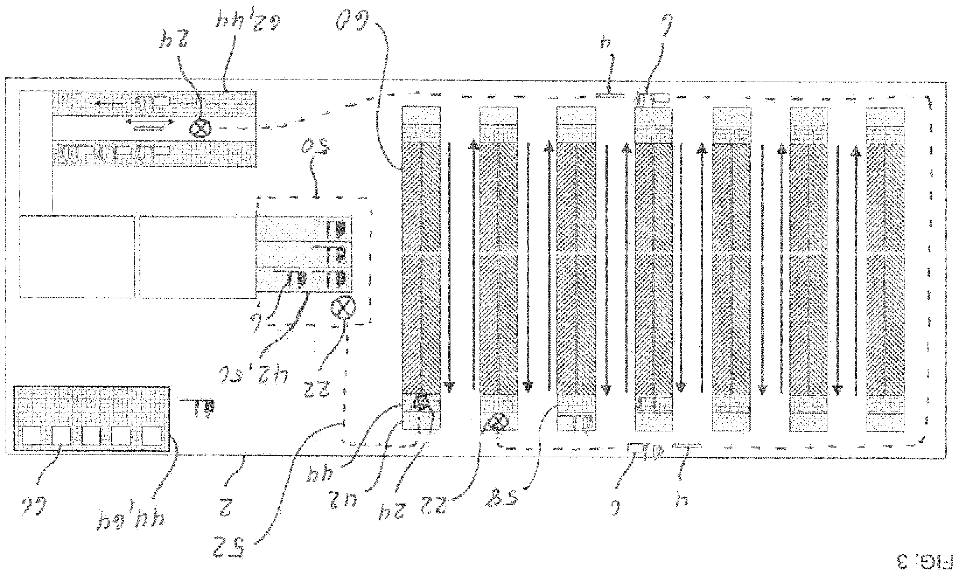

Das Führungs-Flurförderzeug 4 und das Folge-Flurförderzeug 6 sind ferner dazu eingerichtet, dass das Führungs-Flurförderzeug 4 das Folge-Flurförderzeug 6 über die drahtlose Datenverbindung 16 fernsteuert. Hierzu steht die jeweilige Kommunikationseinheit 14 in datentechnischer Verbindung mit einer jeweiligen Fahrzeugsteuerung 18 des Führungs-Flurförderzeugs 4 bzw. des Folge-Flurförderzeugs 6. Das Führungs-Flurförderzeug 4 umfasst außerdem eine Autonomie-Steuereinheit 20, die dazu eingerichtet ist, das Führungs-Flurförderzeug 4 von einem Ausgangspunkt 22 zu einem Zielpunkt 24 zu steuern. Das Führungs-Flurförderzeug 4 legt die Fahrtstrecke zwischen dem Ausgangspunkt 22 und dem Zielpunkt 24 autonom fahrend zurück (vgl. Fig. 3).

In Fig. 3 ist eine schematisch vereinfachte Draufsicht auf einen Logistikstandort gezeigt, in welchem ein Logistiksystem 2 installiert ist. Das Führungs-Flurförderzeug 4 und das Folge-Flurförderzeug 6 (über die drahtlose Datenverbindung 16 ferngesteuert) fahren entlang einer Fahrtstrecke 52 von einem Ausgangspunkt 22 zu einem Zielpunkt 24. Das Logistiksystem 2 ist beispielsweise in einem Lager oder dergleichen als Logistikeinrichtung installiert. In einem solchen Logistiksystem sind eine Vielzahl von Ausgangspunkten 22 und Zielpunkten 24 vorstellbar, hierauf wird weiter unten detaillierter eingegangen.

Die Autonomie-Steuereinheit 20 des in Fig. 1 dargestellten Führungs-Flurförderzeugs 4 ist ferner dazu eingerichtet, während der Fahrt entlang der Fahrtstrecke 52 eine Sollbahn 26 für das Folge-Flurförderzeug 6 zu berechnen und das Folge-Flurförderzeug 6 während der Fahrt entlang der Sollbahn 26 derart fernzusteuern, dass es sich stets innerhalb des Umfeldüberwachungsbereichs 10 des Führungs-Flurförderzeugs 4 befindet. Beispielsweise ist vorgesehen, dass während dieser Fahrt das Folge-Flurförderzeug 6 innerhalb des Umfeldüberwachungsbereichs 10 des Führungs-Flurförderzeugs 4 in Formation mit dem Führungs-Flurförderzeug 4 fahrend ferngesteuert wird.

Eine solche Formationsfahrt ist beispielhaft in Fig. 2 dargestellt. Beispielhaft ist eine Formationsfahrt dargestellt, bei der es sich um eine Hinterherfahrt handelt. Das Folge-Flurförderzeug 6 folgt dem Führungs-Flurförderzeug 4 in dessen Spur. Eine Formationsfahrt ist jedoch nicht auf eine Hinterherfahrt beschränkt. Es ist gemäß weiterer Ausführungsbeispiele vorgesehen, dass das Führungs-Flurförderzeug 4 und das Folge-Flurförderzeug 6 in anderer Anordnung zueinander fahren. Das Folge-Flurförderzeug 6 befindet sich innerhalb des Umfeldüberwachungsbereichs 10, der durch die Sensoren 12 des Umfeldüberwachungssystems 8 des Führungs-Flurförderzeugs 4 aufgespannt wird. Im Kontext der vorliegenden Beschreibung ist unter einer Anordnung des Folge-Flurförderzeugs 6 innerhalb des von dem Führungs-Flurförderzeug 4 aufgespannten Umfeldüberwachungsbereichs 10 insbesondere zu verstehen, dass das Folge-Flurförderzeug 6 zumindest an drei Seiten von dem Umfeldüberwachungsbereich 10 des Führungs-Flurförderzeugs 4 eingeschlossen ist. Im dargestellten Ausführungsbeispiel erstreckt sich der Umfeldüberwachungsbereich 10 in Fahrtrichtung F vor dem Führungs-Flurförderzeug 4 und somit ebenfalls vor dem Folge-Flurförderzeug 6. Seitlich erstreckt sich der Umfeldüberwachungsbereich 10 bis zumindest einem in Fahrtrichtung F hinteren Ende des Folge-Flurförderzeugs 6 oder, wie in Fig. 2 dargestellt, sogar darüber hinaus. In Fahrtrichtung F direkt hinter dem Folge-Flurförderzeug 6 ist es für eine sichere Kolonnenfahrt des Führungs-Flurförderzeugs 4 und des Folge-Flurförderzeugs 6 nicht erforderlich, dass sich der Umfeldüberwachungsbereich 10 auch in diesem Bereich erstreckt.

Dies schließt jedoch nicht aus, dass das Folge-Flurförderzeug 6 einen eigenen, weiteren (nicht dargestellten) Umfeldüberwachungsbereich anhand ebenfalls nicht dargestellter eigener Sensorik und entsprechend zugehöriger Steuereinheiten aufspannt, welcher sich beispielsweise auch in Fahrtrichtung F hinter dem Folge-Flurförderzeug 6 erstreckt. Bei einem solchen zusätzlichen Umfeldüberwachungsbereich kann es sich beispielsweise um einen von dem Folge-Flurförderzeug 6 aufgespannten Personenüberwachungsbereich handeln. Wird eine Verletzung dieses weiteren Umfeldüberwachungsbereichs durch das Folge-Flurförderzeug 6 detektiert, so kann dies entsprechend der eigenen Steuerungslogik darauf reagieren, beispielsweise die Fahrt verlangsamen oder stoppen. Es ist ferner insbesondere vorgesehen, dass das Folge-Flurförderzeug 6 bei einem solchen Ereignis ein Signal an das Führungs-Flurförderzeug 4 übermittelt, welches seinerseits mit einer für einen solchen Fall vorgesehenen Aktion reagiert und beispielsweise die Fahrt der gesamten Kolonne stoppt. Die Kommunikation zwischen dem Folge-Flurförderzeug 6 und dem Führungs-Flurförderzeug 4 erfolgt in diesem Zusammenhang insbesondere über die zwischen den Flurförderzeugen 4, 6 vorhandene drahtlose Datenverbindung 16.

Die Autonomie-Steuereinheit 20 steuert eine Fahrtrichtung FF des Führungs-Flurförderzeugs 4 so, dass dieses der errechneten Fahrtstrecke 52 folgt. Diese Steuerung ist durch Pfeile in Fig. 1 angedeutet. Für eine erfolgreiche Kolonnenfahrt des Führungs-Flurförderzeugs 4 und des Folge-Flurförderzeugs 6 ist es erforderlich, dass das Folge-Flurförderzeug 6 dem Führungs-Flurförderzeug 4 folgt, seine Fahrtrichtung FO also immer wieder einer für das Folge-Flurförderzeug 6 vorgesehenen Sollbahn 26 ausrichtet.

Bei Geradeausfahrt stimmen die Fahrtrichtungen FF des Führungs-Flurförderzeugs 4 und die Fahrtrichtung FO des Folge-Flurförderzeugs 6 überein, wie in Fig. 2 dargestellt. Die beispielsweise von einer Fahrzeugsteuerung 18 vorgenommene Steuerung des Folge-Flurförderzeugs 6 ist in Fig. 1 ebenfalls mit Pfeilen angedeutet. Für eine solche Steuerung des Folge-Flurförderzugs 6 durch das Führungs-Flurförderzeug 4 ist es erforderlich, dass das Führungs-Flurförderzeug 4, genauer genommen seine Autonomie-Steuereinheit 20, die Position des Folge-Flurförderzeugs 6 bestimmen kann oder die entsprechenden Daten zur Verfügung gestellt bekommt. Gemäß einem Ausführungsbeispiel ist vorgesehen, dass die Autonomie-Steuereinheit 20 hierzu Sensordaten des Umfeldüberwachungssystems 8 auswertet. Da sich das Folge-Flurförderzeug 6 zu jedem Zeitpunkt der Kolonnenfahrt innerhalb des Umfeldüberwachungsbereichs 10 befindet, ist eine solche Positionsbestimmung problemlos möglich.

Alternativ oder zusätzlich ist vorgesehen, dass die Autonomie-Steuereinheit 20 interne Parameter aus der Fahrzeugsteuerung 18 des Folge-Flurförderzeugs 6 zum Zweck der Positionsbestimmung des Folge-Flurförderzeugs 6 auswertet. Bei diesen internen Parametern handelt es sich beispielsweise um Messwerte eines Wegstreckenmessers, eine momentane Geschwindigkeit, einen Lenkwinkel oder eine oder mehrere Radgeschwindigkeiten oder die Motordrehzahl des Traktionsmotors des Folge-Flurförderzeugs 6. Durch Auswertung dieser internen Parameter, welche beispielsweise aus der Fahrzeugsteuerung 18 des Folge-Flurförderzeugs 6 über die drahtlose Datenverbindung 16 an das Führungs-Flurförderzeug 4 kommuniziert werden, ist es beispielsweise problemlos möglich, einen konstanten Abstand D zwischen dem Führungs-Flurförderzeug 4 und dem Folge-Flurförderzeug 6 bei Kolonnenfahrt einzuhalten. Verfügt das Folge-Flurförderzeug 6 über ein eigenes Positionserfassungssystem, so können Positionsdaten des Folge-Flurförderzeugs 6 an das Führungs-Flurförderzeug 4 übermittelt werden. Unter Kenntnis der eigenen Positionsdaten ist das Führungs-Flurförderzeug 4 in der Lage die relative Position des Führungs-Flurförderzeugs 4 zu dem Folge-Flurförderzeug 6 zu bestimmen. Auch auf diese Weise kann eine Steuerung des Folge-Flurförderzeugs 6 vorgenommen werden.

Zusätzlich ist insbesondere vorgesehen, dass einer der Sensoren 12 des Umfeldüberwachungssystems 8 des Führungs-Flurförderzeugs 4 zwischen den Flurförderzeugen 4, 6 einen Sicherheitsbereich 28 aufspannt. Bei diesem Sicherheitsbereich 28, welcher sich ebenfalls in Fahrtrichtung F vor dem Führungs-Flurförderzeug 4 erstrecken kann, handelt es sich beispielsweise um einen Personenschutzbereich. Diese Personenschutzbereiche sind insbesondere während des Beginns der Kolonnenfahrt wichtig. Es muss beispielsweise sichergestellt sein, dass vor Beginn der Kolonnenfahrt der Sicherheitsbereich 28 zwischen dem Führungs-Flurförderzeug 4 und dem Folge-Flurförderzeug 6 frei von Personen ist.

Es ist ferner beispielsweise vorgesehen, dass in einem Betriebszustand, in dem die Fahrtrichtung FF des Führungs-Flurförderzeugs 4 und die Fahrtrichtung FO des Folge-Flurförderzeugs 6 übereinstimmen, so wie beispielhaft in Fig. 2 dargestellt, die Kolonnenfahrt mit reduzierter Sensorik durchgeführt wird, da bei einer solchen Geradeausfahrt, in der die Fahrtrichtungen FF, FO einer gemeinsamen Fahrtrichtung F entsprechen, lediglich der Abstand D zwischen den Flurförderzeugen 4, 6 konstant gehalten werden muss.

Zur Bestimmung der Position des Folge-Flurförderzeugs 6 ist ferner insbesondere vorgesehen, dass Daten eines Positionserfassungssystems des Führungs-Flurförderzeugs 4 und des Folge-Flurförderzeugs 6 ausgewertet werden. Das Positionserfassungssystem kann als Teil der Fahrzeugsteuerung 18 implementiert sein. Die Positionserfassung der Flurförderzeuge 4, 6 erfolgt beispielsweise mithilfe eines in einer Logistikeinrichtung installierten Positionierungssystems. Die Flurförderzeuge 4, 6 können ihre Position innerhalb der Logistikeinrichtung beispielsweise durch Auswertung von Funksignalen von Zugangspunkten 30 eines installierten Positionierungssystems bestimmen. Ausgehend von einem beispielsweise anhand einer Signalstärke bestimmten Abstand des Flurförderzeugs 4, 6 zu zumindest drei Zugangspunkten 30 kann die Position des Flurförderzeugs 4, 6 mittels Triangulation bestimmt werden. Die zur Positionsbestimmung verwendeten Funkdatenverbindungen zu den Zugangspunkten 30 können wiederum auf der Grundlage allgemein bekannter Standards betrieben werden, beispielsweise auf der Grundlage von RFID, Ultra-Wide-Band, Bluetooth, WLAN oder dergleichen. Es ist ebenso möglich, dass die Positionsbestimmung seitens der Flurförderzeuge 4, 6 auf der Grundlage der Auswertung der Daten eines GPS-Systems erfolgt, was vor allem bei unter freiem Himmel installierten Logistiksystemen 2 von Vorteil sein kann. Die Zugangspunkte 30 sind mit einem Zentralrechner 32 über Datenverbindungen 54 gekoppelt. Bei den Datenverbindungen 54 kann es sich um drahtgebundene oder drahtlose Datenverbindungen handeln.

Um eine erfolgreiche Kolonnenfahrt zwischen dem Führungs-Flurförderzeug 4 und dem Folge-Flurförderzeug 6 zu ermöglichen, wertet die Autonomie-Steuereinheit 20 die in einem gemeinsamen Koordinatensystem bestimmten Positionen des Führungs-Flurförderzeugs 4 und des Folge-Flurförderzeugs 6 aus und bestimmt aus diesen Daten eine relative Anordnung bzw. Positionierung der Flurförderzeuge 4, 6 zueinander.

Anhand der Kenntnis der eigenen Position, d.h. der Position des Führungs-Flurförderzeugs 4, ist die Autonomie-Steuereinheit 20 in der Lage, für ihre Fahrt vom Ausgangspunkt 22 zum Zielpunkt 24 die von dem Führungs-Flurförderzeug 4 abzufahrende Fahrtstrecke 52 zu berechnen. Für die Berechnung der Fahrtstrecke 52 werden außerdem die räumlichen und örtlichen Gegebenheiten der Logistikeinrichtung, beispielsweise Position und Ausdehnung von Hindernissen wie Regalen, speziellen Sperrbereichen, baulichen konstruktiven Hindernissen und dergleichen, berücksichtigt. Die Autonomie-Steuereinheit 20 verfügt hierzu über entsprechende Daten, welche intern im Führungs-Flurförderzeug 4, beispielsweise in der Fahrzeugsteuerung 18, vorliegen können. Zusätzlich oder alternativ können diese Informationen von der Autonomie-Steuereinheit 20 über eine Datenverbindung 54, beispielsweise über eine drahtlose Datenverbindung 54 zu den Zugangspunkten 30, von einem Zentralrechner 32 der Logistikeinrichtung abgefragt werden.

Die Autonomie-Steuereinheit 20 ist jedoch nicht nur dazu eingerichtet, eine Fahrtstrecke 52 zu berechnen, welche das Führungs-Flurförderzeug 4 abfährt, sondern ebenfalls die Sollbahn 26, welche für das Folge-Flurförderzeug 6 vorgesehen ist. In diesem Zusammenhang kann die Autonomie-Steuereinheit 20 Parameter des Folge-Flurförderzeugs 6 berücksichtigen, wie beispielsweise dessen äußere Abmessungen, eine Abmessung der von dem Folge-Flurförderzeug 6 aufgenommenen Ladung, eine Manövrierfähigkeit des Folge-Flurförderzeugs 6 und dergleichen.

Bei dem Führungs-Flurförderzeug 4 handelt es sich beispielhaft um ein speziell für diesen Zweck vorgesehenes Flurförderzeug, welches nicht zum Transport von Ladung vorgesehen ist. Die beschriebene Funktionalität kann jedoch ebenso in beliebige andere Flurförderzeuge in gleicher Weise implementiert werden. Bei dem Folge-Flurförderzeug 6 handelt es sich beispielhaft um einen Schubmaststapler. Die beschriebene Funktionalität trifft jedoch in gleicher Weise für andere entsprechend eingerichtete Flurförderzeuge zu, beispielsweise für Kommissionierer oder andere Staplertypen.

Das Logistiksystem 2 umfasst ferner eine Anfrageeinheit 34. Die Anfrageeinheit 34 kann, wie in Fig. 1 schematisch dargestellt, als separate Einheit ausgestaltet sein, beispielsweise in Form eines Tablets, Smartphones oder dergleichen. Es ist jedoch ebenso vorgesehen, dass die Anfrageeinheit 34 als funktionelle Einheit, beispielsweise in der Fahrzeugsteuerung 18 des Führungs-Flurförderzeugs 4 oder des Folge-Flurförderzeugs 6 realisiert ist. Die Anfrageeinheit 34 kann ferner als funktionelle Einheit des Zentralrechners 32 des Logistiksystems 2 realisiert sein. Die Anfrageeinheit 34 ist dazu eingerichtet, eine ein bestimmtes Folge-Flurförderzeug 6 betreffende Versendungsanfrage zu empfangen. Dies erfolgt beispielsweise über eine entsprechende Bedienoberfläche des Tabletts oder eine mit der Fahrzeugsteuerung 18 verbundene Bedieneinheit. Die Versendungsanfrage umfasst Informationen betreffend einen Abholpunkt bzw. eine Abholzone 42 und einen Ablieferpunkt bzw. eine Ablieferzone 44 des Folge-Flurförderzeugs 6. Diese Informationen können beispielsweise durch Benutzereingaben der Anfrageeinheit 34 zur Verfügung gestellt werden (vgl. auch Fig. 3).

Das folgende Anwendungsbeispiel illustriert anhand von Fig. 3 die Funktionalität der Anfrageeinheit 34. Beispielsweise handelt es sich bei dem Folge-Flurförderzeug 6 um einen Kommissionierer. Das Folge-Flurförderzeug 6 befindet sich beispielsweise in einem Abholbereich 56, in welchem mehrere Folge-Flurförderzeuge 6, von denen aus Gründen der Übersichtlichkeit lediglich eines mit Bezugszeichen versehen ist, vorhanden sind und parken. Die Folge-Flurförderzeuge 6 sind beispielsweise mit leeren Paletten bestückt. Um einen solchen Kommissionierer mit Ware bestücken zu können, wird dieser von dem Abholbereich 56 in einen Bereitstellungsbereich 58 gebracht. Betreffend die Fahrt von dem Abholbereich 56 in den Bereitstellungsbereich 58 handelt es sich bei dem Abholbereich 56 um eine Abholzone 42 und bei dem Bereitstellungsbereich 58 um eine Ablieferzone 44 für das betreffende Folge-Flurförderzeug 6.

In Fig. 3 sind die Abholzonen 42 in gepunkteter Schraffierung und die Ablieferzonen 44 in karierter Schraffierung dargestellt. Um den Kommissionierer als Folge-Flurförderzeug 6 von dem Abholbereich 56 in den Bereitstellungsbereich 58 zu transportieren, wird beispielsweise von einem Zentralrechner 40 (vgl. Fig. 1) des Logistiksystems 2 eine Versendungsanfrage generiert, welche einem Führungs-Flurförderzeug 4 den Ausgangspunkt 22 in der Nähe des Abholbereichs 56 und den Zielpunkt 24 innerhalb oder in der Nähe des Bereitstellungsbereichs 58 vorgibt. Das Führungs-Flurförderzeug 4 begibt sich daraufhin zu dem Ausgangspunkt 22, der im dargestellten Ausführungsbeispiel innerhalb einer Anfahrtsumgebung 50 liegt, die den Abholbereich 56 als Abholzone 42 umgibt. Der Ausgangspunkt 22 kann ebenso innerhalb der Abholzone 42 liegen. Eine Positionierung des Ausgangspunkts 22 in der die Abholzone 42 umgebenden Anfahrtsumgebung 50 hat den Vorteil, dass das Führungs-Flurförderzeug 4 den Betrieb innerhalb des Abholbereichs 56 nicht beeinträchtigt.

Das Führungs-Flurförderzeug 4 stellt eine drahtlose Datenverbindung 16 mit einem der Folge-Flurförderzeuge 6 her und identifiziert das Folge-Flurförderzeug 6. Der Vorgang der Identifikation wird weiter unten im Detail beschrieben. Nach erfolgreicher Kopplung des Führungs-Flurförderzeugs 4 mit dem Folge-Flurförderzeug 6 wird das Folge-Flurförderzeug 6 von dem Führungs-Flurförderzeug 4 aus dem Abholbereich 56 ausgeparkt. Während dieses Vorgangs kann das Führungs-Flurförderzeug 4 sich in Ruhe befinden, also stillstehen, während es die Fahrt des Folge-Flurförderzeugs 6 fernsteuert. Auch während dieses Vorgangs befindet sich das Folge-Flurförderzeug 6 stets im Umfeldüberwachungsbereich 10 des Führungs-Flurförderzeugs 4. Anschließend fahren das Führungs-Flurförderzeug 4 und das Folge-Flurförderzeug 6, beispielsweise in Konvoifahrt, entlang der Fahrtstrecke 52. Der Konvoi legt diese Fahrtstrecke 52 vollständig in autonomer Fahrt zurück.

Das Folge-Flurförderzeug 6 wird nach Ankunft des Führungs-Flurförderzeugs 4 an dem Zielpunkt 24 in dem Bereitstellungsbereich 58 abgestellt und das Führungs-Flurförderzeug 4 entkoppelt von dem Folge-Flurförderzeug 6. Nun steht das Führungs-Flurförderzeug 4 für weitere Aufgaben bereit.

Ein Logistikmitarbeiter holt das bereitgestellte Flurförderzeug in dem Abholbereich 56 ab und bestückt beispielsweise die Palette 36 (vgl. Fig. 1) eines solchen Kommissionierers oder Schubmaststaplers mit den vorgesehenen Waren, die beispielsweise einem Regallager 60 oder dergleichen entnommen werden. Ist der Vorgang der Kommissionierung abgeschlossen, sind also alle gewünschten Waren auf der Palette 36 des Kommissionierers angeordnet, sendet der Logistikmitarbeiter beispielsweise unter Verwendung einer mobilen Anfrageeinheit 34 (vgl. Fig. 1) eine Versendungsanfrage für seinen Kommissionierer, welcher in diesem Moment zu einem Folge-Flurförderzeug 6 wird. Bevor der Logistikmitarbeiter die Versendungsanfrage stellt, kann er das Flurförderzeug, also beispielsweise den Kommissionierer, in einer der Abholzonen 42 abstellen. Alternativ lässt er das Flurförderzeug einfach am Ort der letzten Tätigkeit, also beispielsweise innerhalb des Regallagers 60 zurück.

Die Anfrageeinheit 34 kommuniziert mit einer Anfragekoordinationseinheit 40 über eine drahtlose Datenverbindung 16. Das Folge-Flurförderzeug 6 oder die Anfrageeinheit 34 kann seine/ihre Position innerhalb der Logistikeinrichtung bestimmen und diese Position als Abholpunkt der Versendungsanfrage definieren. Es kann ebenso die Abholzone 42, in der der Logistikmitarbeiter das Flurförderzeug abgestellt hat, in der Versendungsanfrage angegeben werden. Der Logistikmitarbeiter legt nun noch einen Ablieferpunkt für das Folge-Flurförderzeug 6 fest, beispielsweise einen Ablieferbereich 62, in dem die kommissionierte Palette 36 an eine weitere Logistikeinheit, wie beispielsweise einen Lkw oder dergleichen, übergeben werden soll.

Die Anfrageeinheit 34 ist dazu eingerichtet, festzustellen, ob ein Führungs-Flurförderzeug 4 zur Abholung des Folge-Flurförderzeugs 6 verfügbar ist. Eine solche Information bekommt die Anfrageeinheit 34 beispielsweise von dem Zentralrechner 32 des Logistiksystems 2. Ist das Führungs-Flurförderzeug 4 verfügbar, wird in dessen Autonomie-Steuereinheit 20 die Abholzone 42, an welcher sich das Folge-Flurförderzeug 6 derzeit befindet, als Ausgangspunkt 22 definiert. Die beispielsweise von dem Logistikmitarbeiter festgelegte Ablieferzone 44 wird als Zielpunkt 24 der anschließend autonom im Konvoi mit dem Folge-Flurförderzeug 6 durchzuführenden Fahrt festgelegt. Im Ergebnis begibt sich das Führungs-Flurförderzeug 4, sobald verfügbar, zur Abholzone 42, in der sich das Folge-Flurförderzeug 6 befindet, koppelt mit diesem und bildet einen Konvoi. Es transportiert das Folge-Flurförderzeug 6 in autonomer Fahrt entlang der Fahrtstrecke 52 zu der festgelegten Ablieferzone 44, die der Zielpunkt 24 der autonomen Fahrt ist.

Zusätzlich kann vorgesehen sein, dass mit der oben beschriebenen Versendungsanfrage gleichzeitig noch eine weitere Versendungsanfrage beispielsweise seitens des Logistikmitarbeiters oder auch automatisch über die Anfrageeinheit 34 gestellt wird. Diese zusätzliche Versendungsanfrage kann beispielsweise beinhalten , dass zu einer Ablieferzone 44, die beispielsweise auf derselben Stirnseite der Regale des Regallagers 60 liegt wie die zuvor genannte Abholzone 42 direkt ein leeres Flurförderzeug von dem Führungs-Flurförderzeug 4 mitgebracht wird, welches das beladene Folge-Flurförderzeug 6 abholt. Von dem Führungs-Flurförderzeug 4, welches den ersten Kommissionierer abholt, wird also gleich ein weiterer, leerer Kommissionierer mitgebracht, so dass der Logistikmitarbeiter seine Tätigkeit des Kommissionierens mit diesem weiteren Kommissionierer am Abholpunkt direkt fortsetzen kann. Selbstverständlich ist es ebenso vorgesehen, dass der leere Kommissionierer zu einem von dem Abholpunkt des bestückten ersten Kommissionierers abweichenden Punkt transportiert wird.

Nachdem die Flurförderzeuge, insbesondere die Folge-Flurförderzeuge 6 verschiedene Aufgaben innerhalb des Logistiksystems 2 erledigt haben, wird es gegebenenfalls erforderlich sein, diese aufzuladen. Zu diesem Zweck umfasst das Logistiksystem einen Ladebereich 64. In diesem Ladebereich 64 befinden sich verschiedene Ladestationen 66. Es ist beispielsweise vorgesehen, dass das Folge-Flurförderzeug 6 dem Führungs-Flurförderzeug 4, während diese über die drahtlose Datenverbindung 16 untereinander gekoppelt sind, seinen Ladezustand übermittelt. So kann das Führungs-Flurförderzeug 4 entscheiden, ob es erforderlich ist, das Folge-Flurförderzeug 6 zu dem Ladebereich 64 zu bringen. Diese Aufgabe kann selbstverständlich ebenso der Zentralrechner 32 des Logistiksystems 2 übernehmen. Dieser gibt dann beispielsweise dem entsprechenden Führungs-Flurförderzeug 4 einen Zielpunkt 24 vor, der innerhalb des Ladebereichs 64 oder innerhalb einer Anfahrtsumgebung 50 des Ladebereichs 64 liegt.

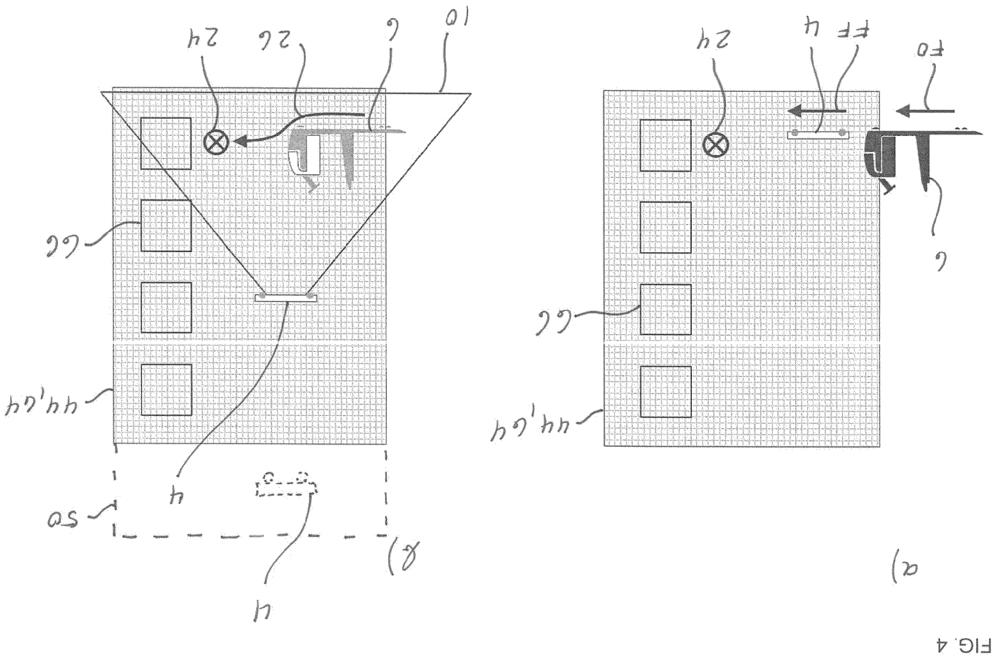

Diese Situation ist schematisch in Fig. 4a dargestellt. Das Führungs-Flurförderzeug 4 bringt den Kommissionierer als Folge-Flurförderzeug 6 in den Ladebereich 64 als Ablieferzone 44. Anschließend stoppt das Führungs-Flurförderzeug 4 den Konvoi und bewegt sich bei stehendem Folge-Flurförderzeug 6 beispielsweise an die in Fig. 4b dargestellte Position. Nun ist das stehende Führungs-Flurförderzeug 4 in der Lage, das Folge-Flurförderzeug 6 bis zu dem Zielpunkt 24 entlang der Sollbahn 26 zu steuern, so dass der Kommissionierer anschließend mit einer der Ladestationen 66 gekoppelt werden kann. Um den Betrieb innerhalb der Ladezone 64 nicht zu beeinflussen, kann es ebenfalls vorgesehen sein, dass das Führungs-Flurförderzeug 4 sich während dieses Vorgangs innerhalb der Anfahrtsumgebung 50 befindet, so wie mit gestrichelter Linie dargestellt.

Zur Kopplung zwischen dem Führungs-Flurförderzeug 4 und dem Folge-Flurförderzeug 6 ist es erforderlich, dass das Führungs-Flurförderzeug 4 das Folge-Flurförderzeug 6 ggf. aus einer großen Anzahl von Folge-Flurförderzeugen 6, welche sich in einem ähnlichen Bereich befinden, eindeutig identifiziert. Zu diesem Zweck umfasst das Führungs-Flurförderzeug 4 beispielsweise ein Identifikationssystem 46 (vgl. Fig. 1). Das Identifikationssystem 46 ist beispielsweise dazu eingerichtet, nach Herstellung der drahtlosen Datenverbindung 16 zwischen dem Führungs-Flurförderzeug 4 und dem Folge-Flurförderzeug 6, das Folge-Flurförderzeug 6 derart fernzusteuern, dass dieses eine vorgegebene Minimalbewegung, eine sogenannte Soll-Minimalbewegung, ausführt. Beispielsweise fährt das Folge-Flurförderzeug 6 eine minimale Strecke oder führt eine minimale Lenkbewegung aus. Diese Soll-Minimalbewegung wird von der Autonomie-Steuereinheit 20 des Führungs-Flurförderzeugs 4, genauer von dem Umfeldüberwachungssystem 8 des Führungs-Flurförderzeugs 4, erfasst. Der Autonomie-Steuereinheit 20 liegen somit Informationen zu einer Ist-Minimalbewegung des Folge-Flurförderzeugs 6 und zu einer Soll-Minimalbewegung vor. Durch einen Vergleich beispielsweise der Ortskoordinaten oder auch der Orientierung zwischen dem Führungs-Flurförderzeug 4 und dem Folge-Flurförderzeug 6 ist die Autonomie-Steuereinheit 20 des Führungs-Flurförderzeugs 4 in der Lage, einen Abgleich zwischen der Soll-Bewegung und der Ist-Bewegung vorzunehmen. Stimmen diese bis auf einen vorgegebenen Grenzwert überein, so hat das Führungs-Flurförderzeug 4 das die betreffende Bewegung ausführende Flurförderzeug eindeutig als Folge-Flurförderzeug 6 identifiziert und eine erfolgreiche Kopplung hat stattgefunden. Alternativ oder zusätzlich zu dem beschriebenen Verfahren kann das Führungs-Flurförderzeug 4 das Folge-Flurförderzeug 6 anhand charakteristischer Merkmale, beispielsweise seiner Form oder eines auf dem Folge-Flurförderzeug 6 vorhandenen QR-Codes oder dergleichen, identifizieren. Es können zur Identifikation auch kurzreichweitige Funktechnologien, beispielsweise das Auslesen eines RFID-Tags oder dergleichen eingesetzt werden.

Für eine erfolgreiche Fernsteuerung des Folge-Flurförderzeugs 6 durch das Führungs-Flurförderzeug 4 ist es außerdem wichtig, dass gemäß einem weiteren Ausführungsbeispiel die Kommunikationseinheiten 14 des Führungs-Flurförderzeugs 4 und des Folge-Flurförderzeugs 6 derart ausgerüstet und eingerichtet sind, dass Steuerbefehle zur Fernsteuerung des Folge-Flurförderzeugs 6 über die drahtlose Datenverbindung 16 mit einer Latenzzeit übertragen werden, welche geringer als eine interne Latenzzeit, beispielsweise auf einem internen Datenbus des Folge-Flurförderzeugs 6 ist. So ist sichergestellt, dass die Steuerungsbefehle des Führungs-Flurförderzeugs 4 das Folge-Flurförderzeug 6 stets rechtzeitig erreichen. Beispielsweise muss zu diesem Zweck die drahtlose Datenverbindung 16 eine geringere Latenzzeit aufweisen als der interne Bus des Folge-Flurförderzeugs 6, bei dem es sich beispielsweise um einen CAN-Bus oder dergleichen handelt.

Gemäß einem weiteren Ausführungsbeispiel ist vorgesehen, dass das Führungs-Flurförderzeug 4 und/oder das Folge-Flurförderzeug 6 dazu eingerichtet ist, sofern die Latenzzeit auf der drahtlosen Datenverbindung 16 einen vorgegebenen Grenzwert überschreitet oder die drahtlose Datenverbindung 16 unterbrochen ist, der eigenen Fahrzeugsteuerung 18 ein Notsignal zu übermitteln. In Reaktion auf dieses Notsignal versetzt die Fahrzeugsteuerung 18 das Führungs-Flurförderzeug 4 bzw. das Folge-Flurförderzeug 6 in einen sicheren Betriebszustand, stoppt beispielsweise dessen Fahrt und aktiviert eine Notsignal-Lichtanlage.

Um ein Flurförderzeug, beispielsweise ein Flurförderzeug älteren Baujahrs, für den Betrieb in dem Logistiksystem 2 nachzurüsten, ist ein Nachrüstsatz 48 (vgl. Fig. 1) vorgesehen. Dieser Nachrüstsatz 48 kann in ein Flurförderzeug integriert werden und wird mit einem internen Bus-System dieses Flurförderzeugs datentechnisch gekoppelt. Der Nachrüstsatz 48 umfasst eine Kommunikationseinheit 14 und eine Steuereinheit 49. Die Kommunikationseinheit 14 ist dazu eingerichtet, eine drahtlose Datenverbindung 16 mit dem Führungs-Flurförderzeug 4 zu betreiben. Ferner ist sie dazu eingerichtet, über die Datenverbindung 16 Steuerdaten zur Fernsteuerung des Flurförderzeugs zu empfangen.

Die Steuereinheit 49 umfasst außerdem eine Schnittstelle zu einer Fahrzeugsteuerung 18 des Flurförderzeugs, wobei die Steuereinheit 49 ferner dazu eingerichtet ist, die von der Kommunikationseinheit 14 über die drahtlose Datenverbindung 16 empfangenen Steuerdaten in Fahrbefehle für das Flurförderzeug umzuwandeln. Beispielsweise werden die empfangenen Fahrbefehle in Radgeschwindigkeiten und Lenkwinkel umgesetzt. An der Schnittstelle zu der Fahrzeugsteuerung 18 werden die entsprechenden Steuerdaten bereitgestellt. Auf diese Weise kann praktisch jedes Flurförderzeug als Folge-Flurförderzeug 6 auf- oder nachgerüstet werden.

In der Darstellung von Fig. 1 ist der Nachrüstsatz 48 optional zu verstehen, d.h. wahlweise wird das Flurförderzeug mit einem entsprechenden Nachrüstsatz 48 ausgestattet oder die Fahrzeugsteuerung 18 weist bereits die geforderte Funktionalität auf und ist außerdem mit einer ebenfalls bereits vorhandenen Kommunikationseinheit 14 gekoppelt.

Gemäß einem Verfahren zum Betreiben des Logistiksystems 2 führt dieses Logistiksystem, welches zumindest ein Führungs-Flurförderzeug 4 und zumindest ein Folge-Flurförderzeug 6 umfasst, die folgenden Schritte aus:
Das Führungs-Flurförderzeug 4 wird im autonomen Fahrbetrieb und das Folge-Flurförderzeug 6 im nicht-autonomen Fahrbetrieb betrieben.

Das Führungs-Flurförderzeug 4 umfasst ein Umfeldüberwachungssystem 8, welches einen Umfeldüberwachungsbereich aufspannt, wobei das Führungs-Flurförderzeug 4 und das Folge-Flurförderzeug 6 jeweils eine Kommunikationseinheit 14 aufweisen, die eine drahtlose Datenverbindung betreiben. Das Führungs-Flurförderzeug 4 steuert das Folge-Flurförderzeug 6 über diese drahtlose Datenverbindung fern.

Das Führungs-Flurförderzeug 6 umfasst eine Autonomie-Steuereinheit 20, die das Folge-Flurförderzeug 6 entlang einer Sollbahn steuert und zur Steuerung des Folge-Flurförderzeugs 6 eine Position und eine Orientierung des Folge-Flurförderzeugs 6 in Bezug auf das Führungs-Flurförderzeug 4 bestimmt.

Die Autonomie-Steuereinheit 20 des Führungs-Flurförderzeugs 4 steuert das Folge-Flurförderzeug 6 derart fern, dass sich das Folge-Flurförderzeug 6 während seiner Fahrt entlang der Sollbahn stets innerhalb des Umfeldüberwachungsbereichs 10 des Führungs-Flurförderzeugs 4 befindet.

Gemäß einem weiteren Ausführungsbeispiel ist ein Verfahren zum Transportieren eines Flurförderzeugs in dem Logistiksystem 2 vorgesehen. Das Logistiksystem 2 umfasst zumindest ein Führungs-Flurförderzeug 4 und zumindest ein Folge-Flurförderzeug 6. Die Autonomie-Steuereinheit 20 des Führungs-Flurförderzeugs 4 ist dazu eingerichtet, dieses zu einem Zielpunkt 24 zu steuern. Der Ausgangspunkt seiner Fahrt ist für diese Funktionalität zunächst unbeachtlich. Während der Fahrt zum Zielpunkt 24 steuert das Führungs-Flurförderzeug 4 das Folge-Flurförderzeug 6 innerhalb seines Umfeldüberwachungsbereichs 10. Beispielsweise führen die beiden Flurförderzeuge eine Formationsfahrt durch.

Über das Anfragesystem gelangt eine Versendungsanfrage betreffend den Transport eines bestimmten Folge-Flurförderzeugs 6 in eine der Ablieferzonen 44 oder zu einem Ablieferpunkt zu dem Führungs-Flurförderzeug 4. Sofern sich das Führungs-Flurförderzeug 4 nicht bereits in der Nähe des betreffenden Folge-Flurförderzeugs 6 befindet, und nicht direkt einen Kopplungsvorgang kann, begibt es sich zunächst auf eine Abholfahrt. Ziel dieser Abholfahrt ist der aktuelle Standort des Folge-Flurförderzeugs 6. Informationen zu dem aktuellen Standort des Folge Flurförderzeugs 6 sind in der Versendungsanfrage umfasst. Anschließend koppelt das Führungs-Flurförderzeug 4 mit dem Folge-Flurförderzeug 6 und führt in autonomer Fahrt den Transport des Folge-Flurförderzeugs 6 zu der gewünschten Ablieferzone 44 oder dem gewünschten Ablieferpunkt durch.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 2: Logistiksystem
- 4: Führungs-Flurförderzeug
- 6: Folge-Flurförderzeug
- 8: Umfeldüberwachungssystem
- 10: Umfeldüberwachungsbereich
- 12: Sensoren
- 14: Kommunikationseinheit
- 16: drahtlose Datenverbindung
- 18: Fahrzeugsteuerung
- 20: Autonomie-Steuereinheit
- 22: Ausgangspunkt
- 24: Zielpunkt
- 26: Sollbahn
- 28: Sicherheitsbereich
- 30: Zugangspunkt
- 32: Zentralrechner
- 34: Anfrageeinheit
- 36: Palette
- 40: Anfragekoordinationseinheit
- 42: Abholzone
- 44: Ablieferzone
- 46: Identifikationssystem
- 48: Nachrüstsatz
- 49: Steuereinheit
- 50: Anfahrtsumgebung
- 52: Fahrtstrecke
- 54: Datenverbindungen
- 56: Abholbereich
- 58: Bereitstellungsbereich
- 60: Regallager
- 62: Ablieferbereich
- 64: Ladebereich
- 66: Ladestationen

- D: Abstand
- F: Fahrtrichtung
- FF: Fahrtrichtung Führungs-Flurförderzeug
- FO: Fahrtrichtung Folge-Flurförderzeug

## Patentansprüche

1. Logistiksystem (2), umfassend ein Führungs-Flurförderzeug (4) und zumindest ein Folge-Flurförderzeug (6), wobei das Führungs-Flurförderzeug (4) für den autonomen Fahrbetrieb ausgerüstet und eingerichtet ist und das zumindest eine Folge-Flurförderzeug (6) nicht für den autonomen Fahrbetrieb ausgerüstet und eingerichtet ist, und wobei das Führungs-Flurförderzeug (4) ein Umfeldüberwachungssystem (8) umfasst, welches einen Umfeldüberwachungsbereich (10) aufspannt, wobei das Führungs-Flurförderzeug (4) und das zumindest eine Folge-Flurförderzeug (6) jeweils eine Kommunikationseinheit (14) aufweisen, die dazu eingerichtet sind, zwischen dem Führungs-Flurförderzeug (4) und dem zumindest einen Folge-Flurförderzeug (6) eine drahtlose Datenverbindung (16) zu betreiben, wobei das Führungs-Flurförderzeug (4) und das zumindest eine Folge-Flurförderzeug (6) ferner dazu eingerichtet sind, dass das Führungs-Flurförderzeug (4) das zumindest eine Folge-Flurförderzeug (6) über die drahtlose Datenverbindung (16) fernsteuert, und wobei das Führungs-Flurförderzeug (4) eine Autonomie-Steuereinheit (20) umfasst, die dazu eingerichtet ist, das Folge-Flurförderzeug (6) entlang einer Sollbahn (26) zu steuern und zur Steuerung des Folge-Flurförderzeugs (6) eine Position und eine Orientierung des Folge-Flurförderzeugs (6) in Bezug auf das Führungs-Flurförderzeug (4) zu bestimmen, wobei die Autonomie-Steuereinheit (20) ferner dazu eingerichtet ist das Folge-Flurförderzeug (6) derart fernzusteuern, dass sich das Folge-Flurförderzeug (6) während seiner Fahrt entlang der Sollbahn (26) stets innerhalb des Umfeldüberwachungsbereichs (10) des Führungs-Flurförderzeugs (4) befindet.

2. Logistiksystem nach Anspruch 1, **dadurch gekennzeichnet, dass** die Autonomie-Steuereinheit (20) des Führungs-Flurförderzeugs (4) dazu eingerichtet ist, die Position und die Orientierung des Folge-Flurförderzeugs (6) in Bezug auf das Führungs-Flurförderzeug (4) durch Auswertung von Sensordaten des Umfeldüberwachungssystems (8) und/oder durch Auswertung von internen Parametern aus einer Fahrzeugsteuerung (18) des Folge-Flurförderzeugs (6) zu bestimmen.

3. Logistiksystem nach Anspruch 1 oder 2, **dadurch gekennzeichnet, dass** die Autonomie-Steuereinheit (20) ferner dazu eingerichtet ist, das Führungs-Flurförderzeug (4) von einem Ausgangspunkt (22) zu einem Zielpunkt (24) zu steuern und insbesondere während dieser Fahrt das zumindest eine Folge-Flurförderzeug (6) innerhalb des Umfeldüberwachungsbereichs (10) des Führungs-Flurförderzeugs (4) in Formation mit dem Führungs-Flurförderzeug (4) fahrend fern zu steuern, wobei ferner insbesondere ein Anfragesystem, umfassend eine Anfrageeinheit (34) und eine Anfragekoordinationseinheit (40), umfasst ist, wobei die Anfrageeinheit (34) dazu eingerichtet ist, eine ein bestimmtes Folge-Flurförderzeug (6) betreffende Versendungsanfrage zu generieren, wobei die Versendungsanfrage Informationen betreffend eine Abholzone (42) oder einen Abholpunkt und Informationen betreffend eine Ablieferzone (44) oder einen Ablieferpunkt umfasst, wobei das bestimmte Folge-Flurförderzeug (6) von der Abholzone (42) oder dem Abholpunkt zu der Ablieferzone (44) oder dem Ablieferpunkt zu transportieren ist, und wobei die Anfragekoordinationseinheit (40) dazu eingerichtet ist, die Versendungsanfrage von der Anfrageeinheit (34) zu empfangen und festzustellen, ob das Führungs-Flurförderzeug (4) verfügbar ist und, sofern dieses verfügbar ist, der Autonomie-Steuereinheit (20) des Führungs-Flurförderzeugs (4) einen innerhalb einer Anfahrtsumgebung (50) der Abholzone (42) oder des Abholpunkts gelegenen Ort als Ausgangspunkt (22) und einen innerhalb einer Anfahrtsumgebung (50) der Ablieferzone (44) oder des Ablieferpunkts gelegenen Ort als Zielpunkt (24) zu übermitteln.

4. Logistiksystem (2) nach einem der Ansprüche 1 bis 3, **dadurch gekennzeichnet, dass** das Führungs-Flurförderzeug (4) ferner ein Identifikationssystem (46) umfasst, welches dazu eingerichtet ist, ein bestimmtes Folge-Flurförderzeug (6) als zur Fernsteuerung vorgesehenes Folge-Flurförderzeug (6) zu identifizieren.

5. Logistiksystem (2) nach Anspruch 4 in Verbindung mit Anspruch 2, **dadurch gekennzeichnet, dass** das Identifikationssystem (46) dazu eingerichtet ist, nach Herstellung der drahtlosen Datenverbindung (16) zwischen dem Führungs-Flurförderzeug (4) und dem bestimmten Folge-Flurförderzeug (6), das bestimmte Folge-Flurförderzeug (6) derart fernzusteuern, dass dieses eine Soll-Minimalbewegung ausführt und von der Autonomie-Steuereinheit (20) die relativen Ortskoordinaten des bestimmten Folge-Flurförderzeugs (6) vor und nach der Soll-Minimalbewegung abzufragen und aus einem Vergleich der Ortkoordinaten vor und nach der Soll-Minimalbewegung eine Ist-Minimalbewegung des bestimmten Folge-Flurförderzeugs (6) zu berechnen und sofern eine Abweichung zwischen der Soll-Minimalbewegung und der Ist-Minimalbewegung geringer als ein vorgegebener Grenzwert ist, das bestimmte Folge-Flurförderzeug (6) als zur Fernsteuerung vorgesehenes Folge-Flurförderzeug (6) zu identifizieren.

6. Logistiksystem (2) nach einem der Ansprüche 1 bis 5, **dadurch gekennzeichnet, dass** die Kommunikationseinheit (14) des Führungs-Flurförderzeugs (4) und die Kommunikationseinheit (14) des Folge-Flurförderzeugs (6) dazu eingerichtet sind, Steuerbefehle zur Fernsteuerung des Folge-Flurförderzeugs (6) über die drahtlose Datenverbindung (16) mit einer Latenzzeit zu übertragen, welche geringer oder gleich ist als eine interne Latenzzeit der in dem Folge-Flurförderzeug (6) auf einer internen Datenverbindung, insbesondere auf einem internen Datenbus, kommunizierten, aus den Steuerbefehlen umgesetzten, internen Steuerbefehle, insbesondere ist die Latenzzeit der auf der drahtlosen Datenverbindung übertragenen Daten kleiner oder gleich 100 ms, ferner insbesondere kleiner oder gleich 50 ms, ferner insbesondere kleiner oder gleich 20 ms, ferner insbesondere kleiner oder gleich 10 ms und ferner insbesondere kleiner oder gleich 5 ms, wobei ferner insbesondere die Kommunikationseinheit (14) des Führungs-Flurförderzeugs (4) und/oder des Folge-Flurförderzeugs (6) dazu eingerichtet sind/ist, sofern die Latenzzeit der auf der drahtlosen Datenverbindung (16) übertragenen Daten einen vorgegebenen Grenzwert überschreitet oder die drahtlose Datenverbindung (16) unterbrochen ist, einer Fahrzeugsteuerung (18) ein Notsignal zu übermitteln, und die Fahrzeugsteuerung (18) dazu eingerichtet ist in Reaktion auf das Notsignal das Führungs-Flurförderzeug (4) und/oder das Folge-Flurförderzeug (6) in einen sicheren Betriebszustand zu versetzen.

7. Logistiksystem (2) nach einem der Ansprüche 1 bis 6, **dadurch gekennzeichnet, dass** das Führungs-Flurförderzeug (4) für den autonomen Fahrbetrieb nach Automatisierungsgrad 4 oder höher ausgerüstet und eingerichtet ist und das Folge-Flurförderzeug (6) für den autonomen Fahrbetrieb nach Automatisierungsgrad 3 oder geringer, insbesondere für den autonomen Fahrbetrieb nach Automatisierungsgrad 2 oder geringer, ferner insbesondere für den autonomen Fahrbetrieb nach Automatisierungsgrad 1 oder geringer ausgerüstet und eingerichtet ist und/oder das Folge-Flurförderzeug (6) über keine Ausrüstung zur Umfeldüberwachung verfügt, die einen Personenschutz gewährleistet, insbesondere über keine Ausrüstung zur Umfeldüberwachung verfügt.

8. Nachrüstsatz (48) für ein Flurförderzeug, **dadurch gekennzeichnet, dass** dieser Nachrüstsatz (48) eine Kommunikationseinheit (14) und eine Steuereinheit (49) umfasst, wobei die Kommunikationseinheit (14) dazu eingerichtet ist eine drahtlose Datenverbindung (16) mit einen Führungs-Flurförderzeug (4) zu betreiben und über die Datenverbindung (16) Steuerdaten zur Fernsteuerung des Flurförderzeugs zu empfangen, wobei die Steuereinheit (49) eine Schnittstelle zu einer Fahrzeugsteuerung (18) des Flurförderzeugs umfasst und dazu eingerichtet ist, die von der Kommunikationseinheit (14) über die drahtlose Datenverbindung (16) empfangenen Steuerdaten in Fahrbefehle für das Flurförderzeug umzuwandeln und an der Schnittstelle bereitzustellen, so dass das Flurförderzeug als Folge-Flurförderzeug (6) in einem Logistiksystem (2) nach einem der Ansprüche 1 bis 9 betreibbar ist.

9. Verfahren zum Betreiben eines Logistiksystems (2), wobei das Logistiksystem (2) ein Führungs-Flurförderzeug (4) und zumindest ein Folge-Flurförderzeug (6) umfasst,
das Führungs-Flurförderzeug (4) im autonomen Fahrbetrieb und das zumindest eine Folge-Flurförderzeug (6) im nicht autonomen Fahrbetrieb betrieben werden,
das Führungs-Flurförderzeug (4) ein Umfeldüberwachungssystem (8) umfasst, welches einen Umfeldüberwachungsbereich (10) aufspannt, wobei das Führungs-Flurförderzeug (4) und das zumindest eine Folge-Flurförderzeug (6) jeweils eine Kommunikationseinheit (14) aufweisen, die eine drahtlose Datenverbindung (16) betreiben, und das Führungs-Flurförderzeug (4) das zumindest eine Folge-Flurförderzeug (6) über die drahtlose Datenverbindung (16) fernsteuert,
das Führungs-Flurförderzeug (4) eine Autonomie-Steuereinheit (20) umfasst, die das Folge-Flurförderzeug (6) entlang einer Sollbahn (26) steuert und zur Steuerung des Folge-Flurförderzeugs (6) eine Position und eine Orientierung des Folge-Flurförderzeugs (6) in Bezug auf das Führungs-Flurförderzeug (4) bestimmt, wobei
die Autonomie-Steuereinheit (20) das Folge-Flurförderzeug (6) derart fernsteuert, dass sich das Folge-Flurförderzeug (6) während seiner Fahrt entlang der Sollbahn (26) stets innerhalb des Umfeldüberwachungsbereichs (10) des Führungs-Flurförderzeugs (4) befindet.

10. Verfahren nach Anspruch 9, **dadurch gekennzeichnet, dass** die Autonomie-Steuereinheit (20) des Führungs-Flurförderzeugs (4) die Position und die Orientierung des Folge-Flurförderzeugs (6) in Bezug auf das Führungs-Flurförderzeug (4) durch Auswertung von Sensordaten des Umfeldüberwachungssystems (8) und/oder durch Auswertung von internen Parametern aus einer Fahrzeugsteuerung (18) des Folge-Flurförderzeugs (6) bestimmt.

11. Verfahren nach Anspruch 9 oder 10, **dadurch gekennzeichnet, dass** die Autonomie-Steuereinheit (20) das Führungs-Flurförderzeug (4) von einem Ausgangspunkt (22) zu einem Zielpunkt (24) steuert und insbesondere während dieser Fahrt das zumindest eine Folge-Flurförderzeug (6) innerhalb des Umfeldüberwachungsbereichs (10) des Führungs-Flurförderzeugs (4) in Formation mit dem Führungs-Flurförderzeug (4) fahrend fernsteuert, wobei ferner insbesondere ein Anfragesystem, umfassend eine Anfrageeinheit (34) und eine Anfragekoordinationseinheit (40), umfasst ist, wobei die Anfrageeinheit (40) eine ein bestimmtes Folge-Flurförderzeug (6) betreffende Versendungsanfrage generiert, wobei die Versendungsanfrage Informationen betreffend eine Abholzone (42) oder einen Abholpunkt und eine Ablieferzone (44) oder einen Ablieferpunkt umfasst, wobei das betreffende Folge-Flurförderzeug (6) von der Abholzone (42) oder dem Abholpunkt zu der Ablieferzone (44) oder dem Ablieferpunkt zu transportieren ist, und wobei die Anfragekoordinationseinheit (40) die Versendungsanfrage von der Anfrageeinheit (34) empfängt und feststellt, ob das Führungs-Flurförderzeug (4) verfügbar ist und, sofern dieses verfügbar ist, der Autonomie-Steuereinheit (20) des Führungs-Flurförderzeugs (4) einen innerhalb einer Anfahrtsumgebung (50) der Abholzone (42) oder des Abholpunkts gelegenen Ort als Ausgangspunkt (22) und einen innerhalb einer Anfahrtsumgebung (50) der Ablieferzone (44) oder des Ablieferpunkts gelegenen Ort als Zielpunkt (24) mitteilt.

12. Verfahren nach einem der Ansprüche 9 bis 11, **dadurch gekennzeichnet, dass** das Führungs-Flurförderzeug (4) ferner ein Identifikationssystem (46) umfasst und ein bestimmtes Folge-Flurförderzeug (6) mit diesem Identifikationssystem (46) als zum fernsteuern vorgesehenes Folge-Flurförderzeug (6) identifiziert.

13. Verfahren nach Anspruch 12 in Verbindung mit Anspruch 10, **dadurch gekennzeichnet, dass** das Identifikationssystem (46) nach Herstellung der drahtlosen Datenverbindung (16) zwischen dem Führungs-Flurförderzeug (4) und dem bestimmten Folge-Flurförderzeug (6) das bestimmte Folge-Flurförderzeug (6) derart fernsteuert, dass dieses eine Soll-Minimalbewegung ausführt, und von der Autonomie-Steuereinheit (20) die relativen Ortskoordinaten des bestimmten Folge-Flurförderzeugs (6) vor und nach der Soll-Minimalbewegung abgefragt werden und aus einem Vergleich der Ortkoordinaten vor und nach der Soll-Minimalbewegung eine Ist-Minimalbewegung des bestimmten Folge-Flurförderzeugs (6) berechnet wird, und sofern eine Abweichung zwischen der Soll-Minimalbewegung und der Ist-Minimalbewegung geringer als ein vorgegebener Grenzwert ist, das bestimmte Folge-Flurförderzeug (6) als zur Fernsteuerung vorgesehenes Folge-Flurförderzeug (6) identifiziert wird.

14. Verfahren nach einem der Ansprüche 9 bis 13, **dadurch gekennzeichnet, dass** die Kommunikationseinheit (14) des Führungs-Flurförderzeugs (4) und die Kommunikationseinheit (14) des Folge-Flurförderzeugs (6) Steuerbefehle zur Fernsteuerung des Folge-Flurförderzeugs (6) über die drahtlose Datenverbindung (16) mit einer Latenzzeit übertragen, welche geringer oder gleich ist als eine interne Latenzzeit, mit der in dem Folge-Flurförderzeug (6) auf einer internen Datenleitung, insbesondere einem internen Datenbus, die aus den Steuerbefehlen umgesetzten internen Steuerbefehle kommuniziert werden, wobei insbesondere die Latenzzeit der auf der drahtlosen Datenverbindung übertragenen Daten kleiner oder gleich 100 ms, ferner insbesondere kleiner oder gleich 50 ms, ferner insbesondere kleiner oder gleich 20 ms, ferner insbesondere kleiner oder gleich 10 ms und ferner insbesondere kleiner oder gleich 5 ms ist, wobei ferner insbesondere die Kommunikationseinheit (14) des Führungs-Flurförderzeugs (4) und/oder des Folge-Flurförderzeugs (6), sofern die Latenzzeit der auf der drahtlosen Datenverbindung (16) übertragenen Daten einen vorgegebenen Grenzwert überschreitet oder die drahtlosen Datenverbindung (16) unterbrochen ist, einer Fahrzeugsteuerung (18) ein Notsignal übermittelt, und die Fahrzeugsteuerung (18) in Reaktion auf das Notsignal das Führungs-Flurförderzeug (4) und/oder das Folge-Flurförderzeug (6) in einen sicheren Betriebszustand versetzt.

15. Verfahren nach einem der Ansprüche 9 bis 14, **dadurch gekennzeichnet, dass** das Führungs-Flurförderzeug (4) in einem autonomen Fahrbetrieb nach Automatisierungsgrad 4 oder höher betrieben wird und das Folge-Flurförderzeug (6) in einem autonomen Fahrbetrieb nach Automatisierungsgrad 3 oder geringer, insbesondere in einem autonomen Fahrbetrieb nach Automatisierungsgrad 2 oder geringer, ferner insbesondere in einem autonomen Fahrbetrieb nach Automatisierungsgrad 1 oder geringer betrieben wird und/oder das Folge-Flurförderzeug (6) über keinen Umfeldüberwachungsbereich aufspannt, in dem ein Personenschutz gewährleistet ist, insbesondere keinen Umfeldüberwachungsbereich aufspannt.

16. Verfahren zum Transportieren eines Flurförderzeugs in einem Logistiksystem (2) mit den folgenden Merkmalen:
das Logistiksystem (2) umfasst zumindest ein Führungs-Flurförderzeug (4) und zumindest ein Folge-Flurförderzeug (6),
das Führungs-Flurförderzeug (4) ist für den autonomen Fahrbetrieb ausgerüstet und eingerichtet und das Folge-Flurförderzeug (6) ist nicht für den autonomen Fahrbetrieb ausgerüstet und eingerichtet,
das Führungs-Flurförderzeug (4) umfasst ein Umfeldüberwachungssystem (8), welches einen Umfeldüberwachungsbereich (10) aufspannt,
das Führungs-Flurförderzeug (4) und das Folge-Flurförderzeug (6) weisen jeweils eine Kommunikationseinheit (14) auf, die dazu eingerichtet sind, zwischen dem Führungs-Flurförderzeug (4) und dem Folge-Flurförderzeug (6) eine drahtlose Datenverbindung (16) zu betreiben,
das Führungs-Flurförderzeug (4) und das Folge-Flurförderzeug (6) sind ferner dazu eingerichtet, dass das Führungs-Flurförderzeug (4) das zumindest eine Folge-Flurförderzeug (6) über die drahtlose Datenverbindung (16) fernsteuert,
das Führungs-Flurförderzeug (4) umfasst eine Autonomie-Steuereinheit (20), die dazu eingerichtet ist, das Folge-Flurförderzeug (6) entlang einer Sollbahn (26) zu steuern und zur Steuerung des Folge-Flurförderzeugs (6) eine Position und eine Orientierung des Folge-Flurförderzeugs (6) in Bezug auf das Führungs-Flurförderzeug (4) zu bestimmen,
die Autonomie-Steuereinheit (20) ist dazu eingerichtet, das Folge-Flurförderzeug (6) derart fernzusteuern, dass sich das Folge-Flurförderzeug (6) während seiner Fahrt entlang der Sollbahn (26) stets innerhalb des Umfeldüberwachungsbereichs (10) des Führungs-Flurförderzeugs (4) befindet,
die Autonomie-Steuereinheit (20) ist ferner dazu eingerichtet, das Führungs-Flurförderzeug (4) zu einem Zielpunkt (24) zu steuern und insbesondere während dieser Fahrt das zumindest eine Folge-Flurförderzeug (6) innerhalb des Umfeldüberwachungsbereichs (10) des Führungs-Flurförderzeugs (4) in Formation mit dem Führungs-Flurförderzeug (4) fahrend fern zu steuern,
es ist ein Anfragesystem umfasst, welches eine Anfrageeinheit (34) und eine Anfragekoordinationseinheit (40) umfasst, wobei die Anfrageeinheit (34) dazu eingerichtet ist, eine ein bestimmtes Folge-Flurförderzeug (6) betreffende Versendungsanfrage zu generieren, wobei die Versendungsanfrage Informationen betreffend eine Ablieferzone (44) oder einen Ablieferpunkt umfasst, wobei das bestimmte Folge-Flurförderzeug (6) zu der Ablieferzone (44) oder dem Ablieferpunkt zu transportieren ist, und
wobei die Anfragekoordinationseinheit (40) dazu eingerichtet ist, der Autonomie-Steuereinheit (20) des Führungs-Flurförderzeugs (4) einen innerhalb einer Anfahrtsumgebung (50) der Ablieferzone (44) oder des Ablieferpunkts gelegenen Ort als Zielpunkt (24) zu übermitteln, wobei das Verfahren die folgenden Schritte umfasst:
Generieren einer Versendungsanfrage betreffend den Transport des bestimmten Folge-Flurförderzeugs (6) in die Ablieferzone (44) oder zu einem Ablieferpunkt, an der Anfrageeinheit (34), und Übermittlung der Versendungsanfrage an die Anfragekoordinationseinheit (40),
Koppeln des Führungs-Flurförderzeugs (4) mit dem bestimmten Folge-Flurförderzeug (6), indem eine drahtlose Datenverbindung (16) zwischen der Kommunikationseinheit (14) des Führungs-Flurförderzeugs (4) und der Kommunikationseinheit (14) des bestimmten Folge-Flurförderzeugs (6) hergestellt wird,
Übermitteln eines innerhalb einer Anfahrtsumgebung (50) der Ablieferzone (44) oder des Ablieferpunkts gelegenen Orts als Zielpunkt (24) an die Autonomie-Steuereinheit (20) des Führungs-Flurförderzeugs (4), durch die Anfragekoordinationseinheit (40),
autonomes Fahren des Führungs-Flurförderzeugs (4) zum Zielpunkt (24), durch die Autonomie-Steuereinheit (20) des Führungs-Flurförderzeugs (4), wobei die Autonomie-Steuereinheit (20) während dieser Fahrt das bestimmte Folge-Flurförderzeug (6) innerhalb des Umfeldüberwachungsbereichs (10) des Führungs-Flurförderzeugs (4) fahrend fernsteuert,
Abstellen des bestimmten Folge-Flurförderzeugs (4) in der Ablieferzone (44) oder an dem Ablieferpunkt.

17. Verfahren nach Anspruch 16, **dadurch gekennzeichnet, dass** vor dem Schritt des Koppelns des bestimmten Führungs-Flurförderzeugs (4) mit dem Folge-Flurförderzeug (6) dem Führungs-Flurförderzeug (4) ein innerhalb einer Anfahrtsumgebung (50) einer Abholzone (42) oder eines Abholpunkts gelegener Ort als Zielpunkt (24) für eine Abholfahrt übermittelt wird und das Führungs-Flurförderzeug (4) in autonomer Abholfahrt zu dem Zielpunkt (24) fährt, wobei insbesondere als Abholpunkt ein aktueller Standort des bestimmten Folge-Flurförderzeugs (6) oder als Abholzone (42) eine aktuelle Aufenthaltszone des Folge-Flurförderzeugs (6) festgelegt wird.

18. Computerprogrammprodukt, welches ein Logistiksystem (2) nach einem der Ansprüche 1 bis 7 dazu veranlasst, das Verfahren nach einem der Ansprüche 9 bis 15 auszuführen.

## Claims

1. A logistics system (2), comprising a leading industrial truck (4) and at least one following industrial truck (6), wherein the leading industrial truck (4) is equipped and configured for autonomous driving operation and the at least one following industrial truck (6) is not equipped and configured for autonomous driving operation, and wherein the leading industrial truck (4) comprises an environment monitoring system (8), which spans an environment monitoring region (10), wherein the leading industrial truck (4) and the at least one following industrial truck (6) each comprise a communication unit (14), which are configured to operate a wireless data connection (16) between the leading industrial truck (4) and the at least one following industrial truck (6), wherein the leading industrial truck (4) and the at least one following industrial truck (6) are further configured such that the leading industrial truck (4) controls the at least one following industrial truck (6) remotely via the wireless data connection (16), and wherein the leading industrial truck (4) comprises an autonomous control unit (20), which is configured to control the following industrial truck (6) along a target path (26) and, in order to control the following industrial truck (6), to determine a position and orientation of the following industrial truck (6) in relation to the leading industrial truck (4), wherein the autonomous control unit (20) is further configured to remotely control the following industrial truck (6) such that the following industrial truck (6) is always located within the environment monitoring region (10) of the leading industrial truck (4) when traveling along the target path (26).

2. The logistics system according to claim 1, **characterized in that** the autonomous control unit (20) of the leading industrial truck (4) is configured to determine the position and orientation of the following industrial truck (6) in relation to the leading industrial truck (4) by evaluating sensor data of the environment monitoring system (8) and/or by evaluating internal parameters from a vehicle controller (18) of the following industrial truck (6).

3. The logistics system according to claim 1 or 2, **characterized in that** the autonomous control unit (20) is further configured to control the leading industrial truck (4) from a starting point (22) to a destination point (24) and, in particular during this journey, to remotely control the at least one following industrial truck (6) such that it travels within the environment monitoring region (10) of the leading industrial truck (4) in formation with the leading industrial truck (4), wherein further in particular a request system, comprising a request unit (34) and a request coordination unit (40), is comprised, wherein the request unit (34) is configured to generate a dispatch request relating to a particular following industrial truck (6), wherein the dispatch request comprises information relating to a pick-up zone (42) or pick-up point and information relating to a delivery zone (44) or delivery point, wherein the particular following industrial truck (6) is to be transported from the pick-up zone (42) or pick-up point to the delivery zone (44) or delivery point, and wherein the request coordination unit (40) is configured to receive the dispatch request from the request unit (34) and to establish whether the leading industrial truck (4) is available and, if it is available, to transmit to the autonomous control unit (20) of the leading industrial truck (4) a location within an approach environment (50) of the pick-up zone (42) or pick-up point as the starting point (22) and a location within an approach environment (50) of the delivery zone (44) or delivery point as the destination point (24).

4. The logistics system (2) according to any one of claims 1 to 3, **characterized in that** the leading industrial truck (4) further comprises an identification system (46), which is configured to identify a particular following industrial truck (6) as the following industrial truck (6) intended to be remotely controlled.

5. The logistics system (2) according to claim 4 in conjunction with claim 2, **characterized in that** the identification system (46) is configured, after the wireless data connection (16) between the leading industrial truck (4) and the particular following industrial truck (6) has been established, to control the particular following industrial truck (6) remotely such that it performs a target minimum movement and to request the relative location coordinates of the particular following industrial truck (6) from the autonomous control unit (20) before and after the target minimum movement and to calculate an actual minimum movement of the particular following industrial truck (6) from a comparison of the location coordinates before and after the target minimum movement and, if a deviation between the target minimum movement and the actual minimum movement is less than a predefined limit value, to identify the particular following industrial truck (6) as the following industrial truck (6) intended to be remotely controlled.

6. The logistics system (2) according to any one of claims 1 to 5, **characterized in that** the communication unit (14) of the leading industrial truck (4) and the communication unit (14) of the following industrial truck (6) are configured to transmit control commands for remotely controlling the following industrial truck (6) via the wireless data connection (16) with a delay time that is less than or equal to an internal delay time of the internal control commands communicated in the following industrial truck (6) on an internal data connection, in particular on an internal data bus, and converted from the control commands, in particular the delay time of the data transmitted on the wireless data connection is less than or equal to 100 ms, more particularly less than or equal to 50 ms, more particularly less than or equal to 20 ms, more particularly less than or equal to 10 ms, and more particularly less than or equal to 5 ms, wherein further in particular the communication unit (14) of the leading industrial truck (4) and/or following industrial truck (6) is/are configured to transmit an emergency signal to a vehicle controller (18) if the delay time of the data transmitted on the wireless data connection (16) exceeds a predefined limit value or if the wireless data connection (16) is interrupted, and the vehicle controller (18) is configured to put the leading industrial truck (4) and/or following industrial truck (6) into a safe operating state in response to the emergency signal.

7. The logistics system (2) according to any one of claims 1 to 6, **characterized in that** the leading industrial truck (4) is equipped and configured for autonomous driving operation according to automation level 4 or higher and the following industrial truck (6) is equipped and configured for autonomous driving operation according to automation level 3 or lower, in particular for autonomous driving operation according to automation level 2 or lower, more particularly for autonomous driving operation according to automation level 1 or lower and/or the following industrial truck (6) has no equipment for monitoring the environment that guarantees personal safety, in particular no equipment for monitoring the environment.

8. A retrofit kit (48) for an industrial truck, **characterized in that** said retrofit kit (48) comprises a communication unit (14) and a control unit (49), wherein the communication unit (14) is configured to operate a wireless data connection (16) to a leading industrial truck (4) and to receive control data for remotely controlling the industrial truck via the data connection (16), wherein the control unit (49) comprises an interface to a vehicle controller (18) of the industrial truck and is configured to convert the control data received from the communication unit (14) via the wireless data connection (16) into driving commands for the industrial truck and to provide said commands at the interface, such that the industrial truck can be operated as the following industrial truck (6) in a logistics system (2) according to any one of claims 1 to 9.

9. A method for operating a logistics system (2), wherein
the logistics system (2) comprises a leading industrial truck (4) and at least one following industrial truck (6),
the leading industrial truck (4) is operated in autonomous driving operation and the at least one following industrial truck (6) is operated in non-autonomous driving operation,
the leading industrial truck (4) comprises an environment monitoring system (8), which spans an environment monitoring region (10), wherein the leading industrial truck (4) and the at least one following industrial truck (6) each comprise a communication unit (14), which operate a wireless data connection (16), and the leading industrial truck (4) controls the at least one following industrial truck (6) remotely via the wireless data connection (16),
the leading industrial truck (4) comprises an autonomous control unit (20), which controls the following industrial truck (6) along a target path (26) and, in order to control the following industrial truck (6), determines a position and orientation of the following industrial truck (6) in relation to the leading industrial truck (4), wherein
the autonomous control unit (20) controls the following industrial truck (6) remotely such that the following industrial truck (6) is always located within the environment monitoring region (10) of the leading industrial truck (4) when traveling along the target path (26).

10. The method according to claim 9, **characterized in that** the autonomous control unit (20) of the leading industrial truck (4) determines the position and orientation of the following industrial truck (6) in relation to the leading industrial truck (4) by evaluating sensor data of the environment monitoring system (8) and/or by evaluating internal parameters from a vehicle controller (18) of the following industrial truck (6).

11. The method according to claim 9 or 10, **characterized in that** the autonomous control unit (20) controls the leading industrial truck (4) from a starting point (22) to a destination point (24) and, in particular during this journey, remotely controls the at least one following industrial truck (6) such that it travels within the environment monitoring region (10) of the leading industrial truck (4) in formation with the leading industrial truck (4), wherein further in particular a request system, comprising a request unit (34) and a request coordination unit (40), is comprised, wherein the request unit (40) generates a dispatch request relating to a particular following industrial truck (6), wherein the dispatch request comprises information relating to a pick-up zone (42) or pick-up point and to a delivery zone (44) or delivery point, wherein the relevant following industrial truck (6) is to be transported from the pick-up zone (42) or pick-up point to the delivery zone (44) or delivery point, and wherein the request coordination unit (40) receives the dispatch request from the request unit (34) and establishes whether the leading industrial truck (4) is available and, if it is available, communicates to the autonomous control unit (20) of the leading industrial truck (4) a location within an approach environment (50) of the pick-up zone (42) or pick-up point as the starting point (22) and a location within an approach environment (50) of the delivery zone (44) or delivery point as the destination point (24).

12. The method according to any one of claims 9 to 11, **characterized in that** the leading industrial truck (4) further comprises an identification system (46) and, using said identification system (46), identifies a particular following industrial truck (6) as the following industrial truck (6) intended to be remotely controlled.

13. The method according to claim 12 in conjunction with claim 10, **characterized in that**, after the wireless data connection (16) between the leading industrial truck (4) and the particular following industrial truck (6) has been established, the identification system (46) controls the particular following industrial truck (6) remotely such that it performs a target minimum movement, and the relative location coordinates of the particular following industrial truck (6) are queried by the autonomous control unit (20) before and after the target minimum movement and an actual minimum movement of the particular following industrial truck (6) is calculated from a comparison of the location coordinates before and after the target minimum movement and, if a deviation between the target minimum movement and the actual minimum movement is less than a predefined limit value, the particular following industrial truck (6) is identified as the following industrial truck (6) intended to be remotely controlled.

14. The method according to any one of claims 9 to 13, **characterized in that** the communication unit (14) of the leading industrial truck (4) and the communication unit (14) of the following industrial truck (6) transmit control commands for remotely controlling the following industrial truck (6) via the wireless data connection (16) with a delay time that is less than or equal to an internal delay time with which the internal control commands converted from the control commands are communicated in the following industrial truck (6) on an internal data line, in particular an internal data bus, wherein, in particular, the delay time of the data transmitted on the wireless data connection is less than or equal to 100 ms, more particularly less than or equal to 50 ms, more particularly less than or equal to 20 ms, more particularly less than or equal to 10 ms, and more particularly less than or equal to 5 ms, wherein further in particular the communication unit (14) of the leading industrial truck (4) and/or following industrial truck (6) transmits an emergency signal to a vehicle controller (18) if the delay time of the data transmitted on the wireless data connection (16) exceeds a predefined limit value or if the wireless data connection (16) is interrupted, and the vehicle controller (18) puts the leading industrial truck (4) and/or following industrial truck (6) into a safe operating state in response to the emergency signal.

15. The method according to any one of claims 9 to 14, **characterized in that** the leading industrial truck (4) is operated in autonomous driving operation according to automation level 4 or higher and the following industrial truck (6) is operated in autonomous driving operation according to automation level 3 or lower, in particular in autonomous driving operation according to automation level 2 or lower, more particularly in autonomous driving operation according to automation level 1 or lower and/or the following industrial truck (6) does not span over an environment monitoring region in which personal safety is guaranteed, in particular does not span an environment monitoring region.

16. A method for transporting an industrial truck in a logistics system (2) having the following features:
the logistics system (2) comprises at least one leading industrial truck (4) and at least one following industrial truck (6),
the leading industrial truck (4) is equipped and configured for autonomous driving operation and the following industrial truck (6) is not equipped and configured for autonomous driving operation,
the leading industrial truck (4) comprises an environment monitoring system (8), which spans an environment monitoring region (10),
the leading industrial truck (4) and the following industrial truck (6) each comprise a communication unit (14), which are configured to operate a wireless data connection (16) between the leading industrial truck (4) and the following industrial truck (6),
the leading industrial truck (4) and the following industrial truck (6) are further configured such that the leading industrial truck (4) controls the at least one following industrial truck (6) remotely via the wireless data connection (16),
the leading industrial truck (4) comprises an autonomous control unit (20), which is configured to control the following industrial truck (6) along a target path (26) and, in order to control the following industrial truck (6), to determine a position and orientation of the following industrial truck (6) in relation to the leading industrial truck (4),
the autonomous control unit (20) is configured to remotely control the following industrial truck (6) such that the following industrial truck (6) is always located within the environment monitoring region (10) of the leading industrial truck (4) when traveling along the target path (26),
the autonomous control unit (20) is further configured to control the leading industrial truck (4) to a destination point (24) and, in particular during this journey, to remotely control the at least one following industrial truck (6) such that it travels within the environment monitoring region (10) of the leading industrial truck (4) in formation with the leading industrial truck (4),
a request system is comprised, which comprises a request unit (34) and a request coordination unit (40), wherein the request unit (34) is configured to generate a dispatch request relating to a particular following industrial truck (6), wherein the dispatch request comprises information relating to a delivery zone (44) or delivery point, wherein the particular following industrial truck (6) is to be transported to the delivery zone (44) or delivery point, and wherein the request coordination unit (40) is configured to transmit to the autonomous control unit (20) of the leading industrial truck (4) a location within an approach environment (50) of the delivery zone (44) or delivery point as the destination point (24), wherein the method comprises the following steps:
generating, at the request unit (34), a dispatch request relating to the transportation of the particular following industrial truck (6) into the delivery zone (44) or to a delivery point, and transmitting the dispatch request to the request coordination unit (40),
coupling the leading industrial truck (4) to the particular following industrial truck (6) by establishing a wireless data connection (16) between the communication unit (14) of the leading industrial truck (4) and the communication unit (14) of the particular following industrial truck (6),
transmitting, by means of the request coordination unit (40), a location within an approach environment (50) of the delivery zone (44) or delivery point as the destination point (24) to the autonomous control unit (20) of the leading industrial truck (4),
autonomously driving the leading industrial truck (4) to the destination point (24) by means of the autonomous control unit (20) of the leading industrial truck (4), wherein, during this journey, the autonomous control unit (20) remotely controls the particular following industrial truck (6) such that it travels within the environment monitoring region (10) of the leading industrial truck (4),
parking the particular following industrial truck (4) in the delivery zone (44) or at the delivery point.

17. The method according to claim 16, **characterized in that**, prior to the step of coupling the particular leading industrial truck (4) to the following industrial truck (6), a location within an approach environment (50) of a pick-up zone (42) or pick-up point as the destination point (24) for a pick-up journey is transmitted to the leading industrial truck (4) and the leading industrial truck (4) travels to the destination point (24) in an autonomous pick-up journey, wherein in particular a current location of the particular following industrial truck (6) is defined as the pick-up point or a current stopover zone of the following industrial truck (6) is defined as the pick-up zone (42).

18. A computer program product, which prompts a logistics system (2) according to any one of claims 1 to 7 to carry out the method according to any one of claims 9 to 15.

## Revendications

1. Système logistique (2) comprenant un chariot de manutention conducteur (4) et au moins un chariot de manutention suiveur (6), le chariot de manutention conducteur (4) étant équipé et configuré pour une conduite autonome, et ledit au moins un chariot de manutention suiveur (6) n'étant pas équipé ni configuré pour une conduite autonome, et dans lequel le chariot conducteur (4) comprend un système (8) de surveillance de l'environnement, qui couvre une zone (10) de surveillance de l'environnement, le chariot conducteur (4) et ledit au moins un chariot de manutention suiveur (6) comprenant chacun une unité de communication (14) conçue de manière à établir une liaison de données sans fil (16) entre le chariot de manutention conducteur (4) et ledit au moins un chariot de manutention suiveur (6), le chariot de manutention conducteur (4) et ledit au moins un chariot de manutention suiveur (6) étant en outre agencés de telle sorte que le chariot de manutention conducteur (4) commande à distance ledit au moins un chariot de manutention suiveur (6) via la liaison de données sans fil (16), et le chariot de manutention conducteur (4) comprend une unité (20) de commande d'autonomie qui est conçue de manière à commander le chariot de manutention suiveur (6) le long d'une trajectoire de consigne (26) et à déterminer, en vue de la commande du chariot de manutention suiveur (6), une position et une orientation du chariot de manutention suiveur (6) par rapport au chariot de manutention conducteur (4), l'unité (20) de commande d'autonomie étant en outre conçue de manière à commander à distance le chariot de manutention suiveur (6) de telle sorte que le chariot de manutention suiveur (6), pendant son déplacement le long de la trajectoire de consigne (26), se trouve en permanence à l'intérieur de la zone (10) de surveillance de l'environnement du chariot de manutention conducteur (4).

2. Système logistique selon la revendication 1, **caractérisé en ce que** l'unité (20) de commande d'autonomie du chariot de manutention conducteur (4) est conçue de manière à déterminer la position et l'orientation du chariot de manutention suiveur (6) par rapport au chariot de manutention conducteur (4) en analysant des données des capteurs du système (8) de surveillance de l'environnement et/ou en analysant des paramètres internes provenant d'un système (18) de commande de véhicule du chariot de manutention suiveur (6).

3. Système logistique selon la revendication 1 ou la revendication 2, **caractérisé en ce que** l'unité (20) de commande d'autonomie est en outre conçue de manière à commander le chariot de manutention conducteur (4) d'un point de départ (22) à un point d'arrivée (24) et, en particulier pendant ce trajet, à commander à distance ledit au moins un chariot de manutention suiveur (6) se déplaçant en formation avec le chariot de manutention conducteur (4) à l'intérieur de la zone (10) de surveillance de l'environnement de ce dernier, un système de requête étant en outre prévu, comprenant notamment une unité de requête (34) et une unité (40) de coordination des requêtes, l'unité de requête (34) étant conçue de manière à générer une requête d'expédition concernant un chariot de manutention suiveur (6) déterminé, la requête d'expédition comprenant des informations relatives à une zone de collecte (42) ou à un point de collecte et des informations relatives à une zone de livraison (44) ou à un point de livraison, le chariot de manutention suiveur (6) déterminé devant être transporté de la zone de collecte (42) ou du point de collecte vers la zone de livraison (44) ou le point de livraison, et l'unité (40) de coordination des requêtes étant conçue de manière à recevoir et constater la requête d'expédition de l'unité de requête (34) et à déterminer si le chariot de manutention conducteur (4) est disponible et, s'il est disponible, pour indiquer à l'unité (20) de commande d'autonomie du chariot de manutention conducteur (4) un emplacement situé à l'intérieur d'un environnement d'approche (50) de la zone de collecte (42) ou du point de collecte en tant que point de départ (22) et un emplacement situé à l'intérieur d'un environnement d'approche (50) de la zone de livraison (44) ou du point de livraison en tant que point d'arrivée (24).

4. Système logistique (2) selon l'une des revendications 1 à 3, **caractérisé en ce que** le chariot de manutention conducteur (4) comprend en outre un système d'identification (46) qui est agencé pour identifier un chariot de manutention suiveur déterminé (6) comme étant le chariot de manutention suiveur (6) destiné à être commandé à distance.

5. Système logistique (2) selon la revendication 4 en combinaison avec la revendication 2, **caractérisé en ce que** le système d'identification (46) est agencé pour, après établissement de la liaison de données sans fil (16) entre le chariot de manutention conducteur (4) et le chariot de manutention suiveur (6) déterminé, commander à distance le chariot de manutention suiveur (6) déterminé de telle sorte que celui-ci exécute un mouvement minimal de consigne, et pour demander à l'unité (20) de commande d'autonomie les coordonnées de position relatives du chariot de manutention suiveur (6) déterminé avant et après le mouvement minimal de consigne, et pour calculer, à partir d'une comparaison des coordonnées de position avant et après le mouvement minimal de consigne, un déplacement minimal réel du chariot de manutention suiveur (6) déterminé et, si un écart entre le mouvement minimal de consigne et le mouvement minimal réel est inférieur à une valeur limite prédéfinie, pour identifier le chariot de manutention suiveur (6) déterminé comme étant un chariot de manutention suiveur (6) destiné à être commandé à distance.

6. Système logistique (2) selon l'une des revendications 1 à 5, **caractérisé en ce que** l'unité de communication (14) du chariot de manutention conducteur (4) et l'unité de communication (14) du chariot de manutention suiveur (6) sont agencées pour transmettre des commandes de pilotage pour la commande à distance du chariot de manutention suiveur (6) via la liaison de données sans fil (16) avec un temps de latence inférieur ou égal à un temps de latence interne des données transmises dans le chariot de manutention suiveur (6) via une liaison de données interne, en particulier via un bus de données interne, le temps de latence des données transmises sur la liaison de données sans fil étant en particulier inférieur ou égal à 100 ms, notamment inférieur ou égal à 50 ms, notamment inférieur ou égal à 20 ms, notamment inférieur ou égal à 10 ms et notamment inférieur ou égal à 5 ms, l'unité de communication (14) du chariot de manutention conducteur (4) et/ou du chariot de manutention suiveur (6) étant en outre notamment conçus pour, dès lors que le temps de latence des données transmises sur la liaison de données sans fil (16) dépasse une valeur limite prédéfinie ou que la liaison de données sans fil (16) est interrompue, transmettre un signal d'urgence à un système (18) de commande de véhicule, le système (18) de commande de véhicule étant agencé pour, en réaction au signal d'urgence, mettre le chariot de manutention conducteur (4) et/ou le chariot de manutention suiveur (6) dans un état de fonctionnement sécurisé.

7. Système logistique (2) selon l'une des revendications 1 à 6, **caractérisé en ce que** le chariot de manutention conducteur (4) est équipé et configuré pour une conduite autonome selon un niveau d'automatisation 4 ou supérieur, et le chariot de manutention suiveur (6) est équipé et configuré pour une conduite autonome selon un niveau d'automatisation 3 ou inférieur, en particulier pour une conduite autonome selon un niveau d'automatisation 2 ou inférieur, et plus particulièrement pour un fonctionnement autonome selon un niveau d'automatisation 1 ou inférieur, et/ou le chariot de manutention suiveur (6) ne dispose d'aucun équipement de surveillance de l'environnement garantissant la protection des personnes, en particulier d'aucun équipement de surveillance de l'environnement.

8. Kit de mise à niveau (48) pour un chariot de manutention, **caractérisé en ce que** ce kit de mise à niveau (48) comprend une unité de communication (14) et une unité de commande (49), l'unité de communication (14) étant conçue pour établir une connexion de données sans fil (16) avec un chariot de manutention conducteur (4) et de recevoir, via la liaison de données (16), des données de commande pour la commande à distance du chariot de manutention, l'unité de commande (49) comprenant une interface avec un système (18) de commande de véhicule du chariot de manutention et étant conçue de manière à convertir les données de commande, reçues par l'unité de communication (14) via la liaison de données sans fil (16), en commandes de déplacement pour le chariot de manutention et pour les mettre à disposition de l'interface, de sorte que le chariot de manutention puisse être utilisé en tant que chariot de manutention suiveur (6) dans un système logistique (2) selon l'une des revendications 1 à 9.

9. Procédé d'exploitation d'un système logistique (2), le système logistique (2) comprenant un chariot de manutention conducteur (4) et au moins un chariot de manutention suiveur (6),
le chariot de manutention conducteur (4) fonctionnant en mode de conduite autonome et ledit au moins un chariot de manutention suiveur (6) fonctionnant en mode de conduite non autonome,
le chariot de manutention conducteur (4) comprend un système (8) de surveillance de l'environnement qui couvre une zone (10) de surveillance de l'environnement, le chariot de manutention conducteur (4) et ledit au moins un chariot de manutention suiveur (6) présentant chacun une unité de communication (14) qui établit une liaison de données sans fil (16), et le chariot de manutention conducteur (4) commandant à distance ledit au moins un chariot de manutention suiveur (6) via la liaison de données sans fil (16),
le chariot de manutention conducteur (4) comprend une unité (20) de commande d'autonomie qui commande le chariot de manutention suiveur (6) le long d'une trajectoire de consigne (26) et qui, pour commander le chariot de manutention suiveur (6), détermine une position et une orientation du chariot de manutention suiveur (6) par rapport au chariot de manutention conducteur (4),
l'unité (20) de commande d'autonomie commande à distance le chariot de manutention suiveur (6) de telle sorte que le chariot de manutention suiveur (6), pendant son déplacement le long de la trajectoire de consigne (26), se trouve en permanence à l'intérieur de la zone (10) de surveillance de l'environnement du chariot de manutention conducteur (4).

10. Procédé selon la revendication 9, **caractérisé en ce que** l'unité (20) de commande d'autonomie du chariot de manutention conducteur (4) détermine la position et l'orientation du chariot de manutention suiveur (6) par rapport au chariot de manutention conducteur (4) en analysant des données de capteurs du système (8) de surveillance de l'environnement et/ou en analysant des paramètres internes provenant d'un système (18) de commande de véhicule du chariot de manutention suiveur (6).

11. Procédé selon la revendication 9 ou la revendication 10, **caractérisé en ce que** l'unité (20) de commande d'autonomie commande le chariot de manutention conducteur (4) d'un point de départ (22) à un point d'arrivée (24) et, en particulier pendant ce trajet, commande à distance ledit au moins un chariot de manutention suiveur (6) se trouvant dans la zone (10) de surveillance de l'environnement du chariot conducteur (4) en les conduisant à distance en formation avec le chariot conducteur (4), un système de requête étant en outre notamment prévu, comprenant une unité de requête (34) et une unité (40) de coordination des requêtes, l'unité de requête (40) générant une requête d'expédition concernant un chariot de manutention suiveur (6) déterminé, la requête d'expédition comprenant des informations relatives à une zone de collecte (42) ou à un point de collecte et des informations relatives à une zone de livraison (44) ou à un point de livraison, le chariot de manutention suiveur (6) déterminé devant être transporté de la zone de collecte (42) ou du point de collecte vers la zone de livraison (44) ou le point de livraison, et l'unité (40) de coordination des requêtes recevant et constatant la requête d'expédition provenant de l'unité de requête (34), et déterminant si le chariot de manutention conducteur (4) est disponible et, s'il est disponible, indiquant à l'unité (20) de commande d'autonomie du chariot de manutention conducteur (4) un emplacement situé à l'intérieur d'un environnement d'approche (50) de la zone de collecte (42) ou du point de collecte en tant que point de départ (22) et un emplacement situé à l'intérieur d'un environnement d'approche (50) de la zone de livraison (44) ou du point de livraison en tant que point d'arrivée (24).

12. Procédé selon l'une des revendications 9 à 11, **caractérisé en ce que** le chariot de manutention conducteur (4) comprend en outre un système d'identification (46) et identifie, au moyen de ce système d'identification (46), un chariot de manutention suiveur déterminé (6) comme étant le chariot de manutention suiveur (6) destiné à être commandé à distance.

13. Procédé selon la revendication 12 en combinaison avec la revendication 10, **caractérisé en ce que** le système d'identification (46), après établissement de la connexion de données sans fil (16) entre le chariot de manutention conducteur (4) et le chariot de manutention suiveur (6) déterminé, commande à distance le chariot de manutention suiveur (6) déterminé de telle sorte que celui-ci exécute un mouvement minimal de consigne, et que ce mouvement minimal de consigne soit déterminé par l'unité (20) de commande d'autonomie à partir des coordonnées de position relatives du chariot de manutention suiveur (6) déterminé avant et après le mouvement minimal de consigne, et, à partir d'une comparaison des coordonnées de position avant et après le mouvement minimal de consigne, pour calculer un mouvement minimal réel du chariot de manutention suiveur (6) déterminé, et, si un écart entre le mouvement minimal de consigne et le mouvement minimal réel est inférieur à une valeur limite prédéfinie, le chariot de manutention suiveur (6) déterminé est identifié comme étant un chariot de manutention suiveur (6) destiné à être commandé à distance.

14. Procédé selon l'une des revendications 9 à 13, **caractérisé en ce que** l'unité de communication (14) du chariot de manutention conducteur (4) et l'unité de communication (14) du chariot de manutention suiveur (6) transmettent des commandes de pilotage pour la commande à distance du chariot de manutention suiveur (6) via la liaison de données sans fil (16) avec un temps de latence inférieur ou égal à un temps de latence interne avec lequel, dans le chariot de manutention suiveur (6), via une liaison de données interne, en particulier via un bus de données interne, les commandes de pilotage internes converties à partir des commandes de pilotage sont communiquées, le temps de latence des données transmises sur la liaison de données sans fil étant en particulier inférieur ou égal à 100 ms, notamment inférieur ou égal à 50 ms, notamment inférieur ou égal à 20 ms, notamment inférieur ou égal à 10 ms et notamment inférieur ou égal à 5 ms, l'unité de communication (14) du chariot de manutention conducteur (4) et/ou du chariot de manutention suiveur (6) transmettant en outre, notamment, un signal d'urgence à un système (18) de commande de véhicule dès lors que le temps de latence des données transmises sur la liaison de données sans fil (16) dépasse une valeur limite prédéfinie ou que la liaison de données sans fil (16) est interrompue, le système (18) de commande de véhicule mettant, en réaction au signal d'urgence, le chariot de manutention conducteur (4) et/ou le chariot de manutention suiveur (6) dans un état de fonctionnement sécurisé.

15. Procédé selon l'une des revendications 9 à 14, **caractérisé en ce que** le chariot de manutention conducteur (4) fonctionne en mode de conduite autonome selon un niveau d'automatisation 4 ou supérieur, et le chariot de manutention suiveur (6) fonctionne en mode de conduite autonome selon un niveau d'automatisation 3 ou inférieur, en particulier selon un niveau d'automatisation 2 ou inférieur, et plus particulièrement selon un niveau d'automatisation 1 ou inférieur, et/ou le chariot de manutention suiveur (6) ne couvre aucune zone de surveillance de l'environnement dans laquelle la protection des personnes est garantie, en particulier ne couvre aucune zone de surveillance de l'environnement.

16. Procédé de transport d'un chariot de manutention dans un système logistique (2) présentant les caractéristiques suivantes :
le système logistique (2) comprend au moins un chariot de manutention conducteur (4) et au moins un chariot de manutention suiveur (6), le chariot de manutention conducteur (4) étant équipé et configuré pour une conduite autonome et le chariot de manutention suiveur (6) n'étant pas équipé ni configuré pour une conduite autonome,
le chariot de manutention conducteur (4) comprend un système (8) de surveillance de l'environnement qui couvre une zone (10) de surveillance de l'environnement,
le chariot de manutention conducteur (4) et le chariot de manutention suiveur (6) présentent chacun une unité de communication (14) qui est conçue de manière à établir une liaison de données sans fil (16) entre le chariot de manutention conducteur (4) et le chariot de manutention suiveur (6),
le chariot de manutention conducteur (4) et le chariot de manutention suiveur (6) sont en outre agencés de telle sorte que le chariot de manutention conducteur (4) commande à distance ledit au moins un chariot de manutention suiveur (6) via la liaison de données sans fil (16),
le chariot de manutention conducteur (4) comprend une unité (20) de commande d'autonomie qui est conçue de manière à commander le chariot de manutention suiveur (6) le long d'une trajectoire de consigne (26) et à déterminer, en vue de la commande du chariot de manutention suiveur (6), une position et une orientation du chariot de manutention suiveur (6) par rapport au chariot de manutention conducteur (4) ;
l'unité (20) de commande d'autonomie est conçue de manière à commander à distance le chariot de manutention suiveur (6) de telle sorte que, pendant son déplacement le long de la trajectoire de consigne (26), le chariot de manutention suiveur (6) se trouve en permanence à l'intérieur de la zone (10) de surveillance de l'environnement du chariot de manutention conducteur (4),
l'unité (20) de commande d'autonomie est en outre conçue de manière à commander le chariot de manutention conducteur (4) vers un point de destination (24) et, en particulier pendant ce déplacement, pour commander à distance la conduite en formation dudit au moins un chariot de manutention suiveur (6), à l'intérieur de la zone (10) de surveillance de l'environnement du chariot de manutention conducteur (4),
un système de requête étant prévu, comprenant une unité de requête (34) et une unité (40) de coordination des requêtes, l'unité de requête (34) étant conçue de manière à générer une requête d'expédition concernant un chariot de manutention suiveur (6) déterminé, ladite requête d'expédition comprenant des informations relatives à une zone de livraison (44) ou à un point de livraison, le chariot de manutention suiveur (6) déterminé devant être transporté vers la zone de livraison (44) ou le point de livraison, et l'unité (40) de coordination des requêtes étant conçue de manière à transmettre à l'unité (20) de commande d'autonomie du chariot de manutention conducteur (4) un emplacement situé dans un environnement d'approche (50) de la zone de livraison (44) ou du point de livraison en tant que point de destination (24), le procédé comprenant les étapes suivantes :
générer, au niveau de l'unité de requête (34), une requête d'expédition concernant le transport du chariot de manutention suiveur (6) déterminé vers la zone de livraison (44) ou vers un point de livraison, et transmettre la requête d'expédition à l'unité (40) de coordination des requêtes,
relier le chariot de manutention conducteur (4) avec le chariot de manutention suiveur (6) déterminé en établissant une connexion de données sans fil (16) entre l'unité de communication (14) du chariot de manutention conducteur (4) et l'unité de communication (14) du chariot de manutention suiveur (6) déterminé,
transmettre, par l'unité (40) de coordination des requêtes, à l'unité (20) de commande d'autonomie du chariot de manutention conducteur (4), un emplacement situé dans un environnement d'approche (50) de la zone de livraison (44) ou du point de livraison en tant que point de destination (24),
conduire de manière autonome, par l'unité (20) de commande d'autonomie du chariot de manutention conducteur (4), le chariot de manutention conducteur (4) vers le point de destination (24), l'unité (20) de commande d'autonomie commandant à distance, pendant ce déplacement, la conduite du chariot de manutention suiveur (6) déterminé se déplaçant à l'intérieur de la zone (10) de surveillance de l'environnement du chariot de manutention conducteur (4),
faire stationner le chariot de manutention suiveur (6) déterminé dans la zone de livraison (44) ou au point de livraison.

17. Procédé selon la revendication 16, **caractérisé en ce que**, avant l'étape consistant à relier le chariot de manutention conducteur (4) déterminé avec le chariot de manutention suiveur (6), un emplacement situé à l'intérieur d'un environnement d'approche (50) d'une zone de collecte (42) ou d'un point de collecte est transmis au chariot de manutention conducteur (4) en tant que point de destination (24) pour un trajet de collecte, et le chariot de manutention conducteur (4) se rend au point de destination (24) en mode de collecte autonome, un emplacement actuel du chariot de manutention suiveur (6) déterminé étant notamment défini en tant que point de collecte, ou une zone actuelle de présence du chariot de manutention suiveur (6) étant définie en tant que zone de collecte (42).

18. Produit logiciel destiné à amener un système logistique (2) selon l'une des revendications 1 à 7 à mettre en œuvre le procédé selon l'une des revendications 9 à 15.
